# EUROPEAN PATENT APPLICATION

(11) **EP 1 392 075 A1**
(43) Date of publication of application: **25.02.2004**
(21) Application number: 03018572.2
(22) Date of filing: 18.08.2003
(51) Int. Cl.: H04Q 7/38, H04Q 7/22

(54) **Apparatus and method for transmitting/receiving data during handover in a mobile communication system providing MBMS service**

(30) Priority: 17.08.2002 KR 2002048751
(71) Applicant: SAMSUNG ELECTRONICS CO., LTD., Suwon-City, Kyungki-do (KR)
(72) Inventor: Hwang, Sung-Oh, Paldal-gu, Suwon-city, Kyungki-do (KR); Lee, Kook-Heui, Paldal-gu, Suwon-city, Kyungki-do (KR); Kim, Soeng-Hun, Paldal-gu, Suwon-city, Kyungki-do (KR); Choi, Sung-Ho, Paldal-gu, Suwon-city, Kyungki-do (KR); Cho, Ki-Ho, Paldal-gu, Suwon-city, Kyungki-do (KR); Park, Joon-Goo, Paldal-gu, Suwon-city, Kyungki-do (KR)
(74) Representative: Grünecker, Kinkeldey, Stockmair & Schwanhäusser Anwaltssozietät

(57) **Abstract**

A system and method for providing a packet service to a user equipment (UE) when the UE moves to a second cell managed by a second radio network controller (RNC), the UE requesting a permission to receive the packet service in a first cell managed by the first RNC, in a mobile communication system providing the packet service. In the system and method, the first RNC transmits control information necessary for providing the packet service to the UE, to the second RNC. The second RNC analyzes the control information and notifies the first RNC that the second RNC is providing the packet service, when the second RNC can provide the packet service. The second RNC transmits packet service data to the UE.

## Description

### BACKGROUND OF THE INVENTION

### 1. Field of the Invention

The present invention relates generally to a mobile communication system, and more particularly, to an apparatus and method for providing a multimedia broadcast/multicast service (MBMS) when a user equipment (UE) changes a cell in a mobile communication system providing an MBMS service.

### 2. Description of the Related Art

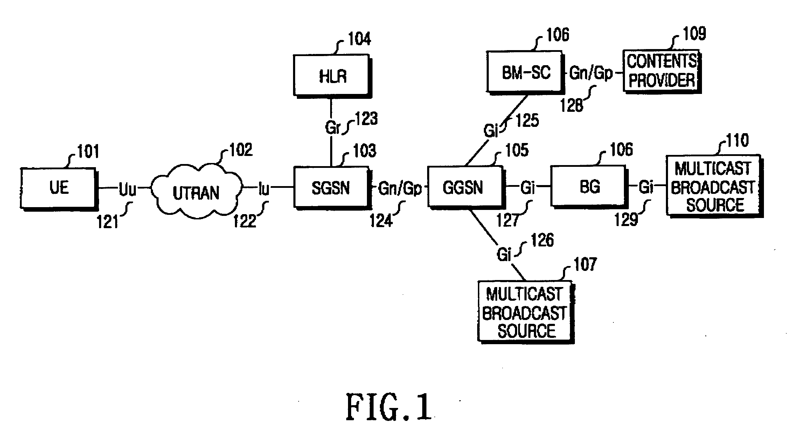

Recently, due to the development of communication technology, a service provided by a mobile communication system is developing into multimedia multicast/multicast communication system for transmitting voice service data and high-capacity multimedia data such as packet data and circuit data. In order to support multimedia multicast/multicast communication, a multimedia broadcast/multicast service (hereinafter referred to as "MBMS") has been proposed in which one or several multimedia data sources provide a service to a plurality of UEs. The MBMS service supports multimedia data, such as real-time image and voice data, still image data, and text data. In addition, the MBMS service simultaneously provides voice data and image data, and requires a large amount of transmission resources. Therefore, the MBMS service is provided over a broadcast channel, because of the possibility that a plurality of services would be simultaneously provided within one cell. Furthermore, the MBMS service can provide a point-to-point (hereinafter referred to as "PtP") service for providing independent services to respective subscribers, and a point-to-multipoint (hereinafter referred to as "PtM") service for servicing the same MBMS data to a plurality of subscribers. A 3GPP (3^{rd} Generation Partnership Project) mobile communication system to which the MBMS service is applied will be described with reference to FIG. 1.

FIG. 1 schematically illustrates a structure of a mobile communication system for providing an MBMS service. As illustrated in FIG. 1, a mobile communication system for providing an MBMS service includes a UE 101, a UMTS (Universal Mobile Telecommunications System) radio access network (UTRAN) 102, a serving GPRS (General Packet Radio Service) support node (SGSN) 103 belonging to a core network (CN), a home location register (HLR) 104, a gateway GPRS support node (GGSN) 105, a broadcast/multicast service center (BM-SC) 106, a border gateway (BG) 108, a multicast broadcast source (MBS) 107, a contents provide (CP) 109, and a multicast broadcast source (MBS) 110.

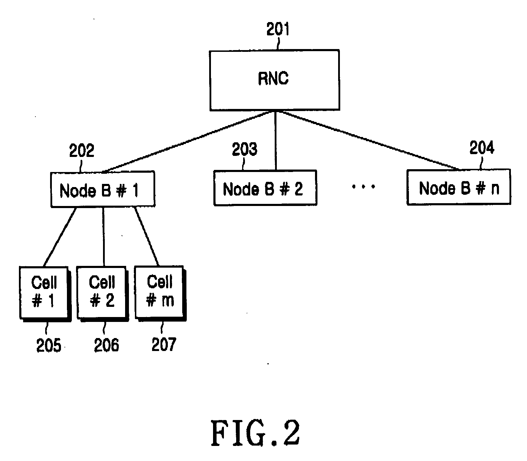

The UE 101, a user device, directly receives MBMS data and includes hardware or software supporting the MBMS service. The UTRAN 102 is a radio communication network for connecting the UE 101 to the CN. A structure of the UTRAN 102 will be described with reference to FIG. 2.

FIG. 2 schematically illustrates a structure of the UTRAN 102 illustrated in FIG. 1. Referring to FIG. 2, the UTRAN 102 includes a plurality of radio network controllers (RNCs), a plurality of Node Bs controlled by the RNCs, and a plurality of cells belonging to the Node Bs. Although the UTRAN 102 can include a plurality of RNCs, as is illustrated in FIG. 2, the UTRAN 102 includes only one RNC 201, for simplicity. The RNC 201 controls a plurality of Node Bs, i.e., Node B#1 202, Node B#2 203, ···, Node B#n 204. The Node B#1 202 controls a plurality of cells, i.e., cell#1 205, cell#2 206, ···, cell#m 207. The total number of Node Bs controlled by the RNC 201 and the total number of cells controlled by each of the Node Bs are determined according to conditions of the MBMS mobile communication system.

The UE 101 is connected to the UTRAN 102 via a Uu interface 121. The UTRAN 102 is connected to the SGSN 103 belonging to the CN via an Iu interface 122. Table 1 below shows the different roles of the MBMS elements illustrated in FIG. 1, and Table 2 below shows the interfaces between these elements.

**Table 1**

| No. | Name | Role |
|---|---|---|
| 101 | UE | It receives an MBMS service and always services the MBMS service to user. |
| 102 | UTRAN | It delivers MBMS data to a UE, and delivers an MBMS request from a UE to a CN. For more details, see FIG. 2. |
| 102 | SGSN | It authenticates a UE requesting an MBMS service by receiving data from an HLR, and authenticates the UE by receiving a right to use an MBMS service requested by the UE from the HLR. It sets up a Radio Access Bearer (RAB) for the MBMS service requested by the UE. It supports the MBMS service even when a UE moves from cell to cell. It connects with an MBMS source via a GGSN. It collects accounting information for the MBMS service used by a UE. |
| 104 | HLR | It stands for Home Location Register, and manages authentication information for each UE and the contents for an MBMS service type available for each UE. |
| 105 | GGSN | It stands for Gateway GPRS Service Node, and directly receives MBMS data to be provided to a UE from a Multicast/Broadcast Source 110 via a BM-SC 106 and a BG 108, and transmits the received MBMS data to an SGSN. It collects accounting information of a UE, manages a moving situation of each UE, and manages service quality (QoS) of the MBMS service being provided to the UE. |
| 106 | BM-SC | It stands for Broadcast/Multicast Service Center, authenticates a contents provider, determines QoS of the MBMS service, performs error correction on MBMS data, provides accounting information to a contents provider, receives MBMS data from contents provider 109, and provides the received MBMS data to GGSN 105. It notifies a currently served MBMS service to UE. |
| 107 | Multicast/Broadcast Source | It directly provides MBMS data to a GGSN. |
| 108 | BG | It stands for Border Gateway, receives MBMS data from Multicast/Broadcast Source in a network currently not managed by the service provider, and transmits the received MBMS data to a GGSN. |
| 109 | Contents Provider | It provides MBMS contents to BM-SC 106. |
| 110 | Multicast/Broadcast Source | It directly provides MBMS data to a GGSN. |

**Table 2**

| No. | Name | Role |
|---|---|---|
| 121 | Uu | Interface between a UE and a UTRAN |
| 122 | Iu | Interface between a UTRAN and a CN |
| 123 | Gr | Interface between an SGSN and an HLR |
| 124 | Gn/Gp | Interface between an SGSN and a GGSN |
| 125 | Gi | Interface between a GGSN and a BM-SC |
| 126 | Gi | Interface between a GGSN and a multicast/broadcast source |
| 127 | Gi | Interface between a GGSN and a BG |
| 128 | Gn/Gp | Interface between a BM-SC and a contents provider |
| 129 | Gi | Interface between a BG and a multicast/broadcast source |

Names of the interfaces between the respective elements, shown in Table 2, are defined in the 3GPP, and the names of the interfaces are subject to change.

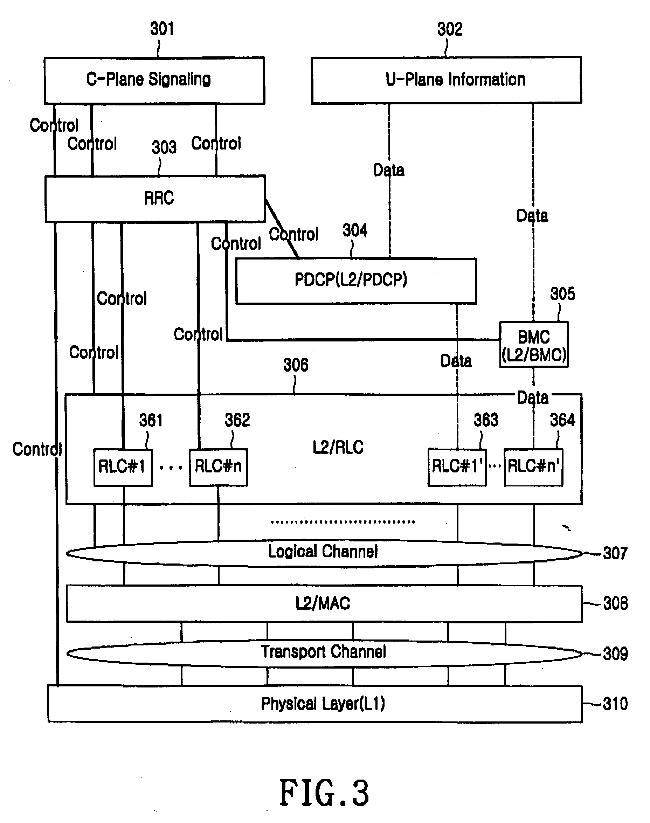

FIG. 3 schematically illustrates a structure of an upper layer of the UTRAN 102 illustrated in FIG. 1. Referring to FIG. 3, upper layer messages processed in the UTRAN 102 are roughly classified into a control signal and user data. In FIG. 3, the control signal is represented by control plain signaling (C-Plain signaling) 301, and the user data is represented by user plain information (U-Plain information) 302. The C-Plain signaling 301 and the U-Plain information 302 are non-access stratum (NAS) messages, and the NAS messages represent messages unused for radio connection between the UE 101 and the UTRAN 102. Herein, the NAS message represents a message, the contents of which are not required to be known to the UTRAN 102. Unlike the NAS message, an access stratum (AS) message is a message directly used for radio connection between the UTRAN 102 and the UE 101, and represents data or control signaling used in a radio resource control (RRC) layer 303 and its lower layer.

The RRC layer 303 controls Layer 1 (L1) 310, which is a physical layer related to connection between the UE 101 and the UTRAN 102, a medium access control layer of Layer 2 (L2/MAC) 308, a radio link control layer of Layer 2 (L2/RLC) 306, a packet data convergency protocol layer of Layer 2 (L2/PDCP) 304, and a broadcast/multicast control layer of Layer 2 (L2/BMC) 305, thereby controlling operations related to connection between the UE 101 and the UTRAN 102, such as physical call setup, logical call setup, control information transmission/reception, and measurement data transmission/reception.

The L2/PDCP layer 304 receives transmission data from a NAS layer, and transmits the received transmission data to the L2/RLC layer 306 using a corresponding protocol. The L2/BMC layer 305 receives data necessary for broadcast and multicast from the NAS layer, and transmits the received data to the L2/RLC layer 306.

The L2/RLC layer 306 receives a control message, transmitted from the RRC layer 303 to the UE 101, processes the received control message in an appropriate format in a first RLC layer (RLC#1) 361 to an m^{th} RLC layer (RLC#m) 362, and transmits the processed control message to the L2/MAC layer 308 using a logical channel 307. In addition, the L2/RLC layer 306 receives data from the L2/PDCP layer 304 and the L2/BMC layer 305, processes the received data in an appropriate format in a first RLC layer (RLC#1) 363 to an n^{th} RLC layer (RLC#n) 364, and transmits the processed data to the L2/MAC layer 308 using the logical channel 307. Here, the number of RLC layers are formed in the L2/RLC layer 306 is determined by the number of radio links between the UE 101 and the UTRAN 102, and the first RLC layer 361 to the m^{th} RLC layer 362 are generated for control signaling, while the first RLC layer 363 to the n^{th} RLC layer 364 are generated for user data.

The logical channel 307 is roughly classified into a dedicated type assigned to a specific UE or a small number of specific UEs, and a common type, which is commonly assigned to a plurality of UEs. If a message transmitted over the logical channel 307 is a control message, the message is classified as a control type, while if a message transmitted over the logical channel 307 is a traffic message, or a data message, the message is classified as a traffic type. In Table 3 below, types and roles of logical channels used in the 3GPP are shown.

**Table 3**

| Name | Role |
|---|---|
| BCCH | It stands for Broadcast Control Channel, and is used for downlink transmission from a UTRAN to a UE, and for transmission of UTRAN system control information. |
| PCCH | It stands for Paging Control Channel, and is used for downlink transmission from a UTRAN to a UE, and is used in transmitting control information to a UE when a position of a cell to which the UE belongs is unknown. |
| CCCH | It is used for transmission of control information between a UE and a network, and is used when the UE has no channel connected to an RRC. |
| DCCH | It is used for PtP transmission of control information between a UE and a network, and is used when the UE has a channel connected to an RRC. |
| CTCH | It is used for PtM data transmission between a network and UEs. |
| DTCH | It is used for PtP data transmission between a network and a UE. |

The L2/MAC layer 308 manages radio resources between the UE 101 and the UTRAN 102 and also manages a connection between the UE 101 and the UTRAN 102, under the control of the RRC layer 303. In addition, the L2/MAC layer 308 receives signals on the logical channel 307 from the L2/RLC layer 306, maps the received signals to transport channels 309, and then transmits the mapped signals to the L1 layer 310. In Table 4 below, types and roles of the transport channels used in the 3GPP are shown.

**Table 4**

| Name | Role |
|---|---|
| BCH | It stands for Broadcast Channel, and is mapped to BCCH to transmit data on the BCCH. |
| PCH | It stands for Paging Channel, and is mapped to PCCH to transmit data on the PCCH. |
| RACH | It stands for Random Access Channel, and is used for transmission from a UE to a network and also used for network connection and transmission of control message and short-length data. DCCH, CCCH and DTCH can be mapped to the RACH. |
| FACH | It stands for Forward Access Channel, and is used for transmission of control message and data from a network to a specific UE or UEs. BCCH, CTCH, CCCH, DTCH, DCCH can be mapped to the FACH. |
| DCH | It stands for Dedicated Channel, and is used for transmission of data and control signaling between a network and a UE. DTCH and DCCH are mapped to the DCH. |
| DSCH | It stands for Downlink Shared Channel, and it is a downlink channel from a network to a UE, used for transmission of high capacity data. DTCH and DCCH are mapped to the DSCH. |
| HS-DSCH | It stands for High Speed DSCH, and it is a downlink channel from a network to a UE, created by improving transmission capability of the DSCH. DTCH and DCCH are mapped to the HS-DSCH. |

In addition to the transport channels shown in Table 4, there are an uplink shared channel (USCH) and a common packet channel (CPCH). However, since they are not related to the invention, a detailed description thereof will be omitted for simplicity.

The transport channels 309 transmitted to the L1 layer 310 are transmitted to the UE 101 or the UTRAN 102 after being mapped to actual physical channels in the L1 layer 310. The physical channels include a primary common control physical channel (P-CCPCH) for transmitting a broadcast channel (BCH), a secondary common control physical channel (S-CCPCH) for transmitting a paging channel (PCH) and a forward access channel (FACH), a dedicated physical channel (DPCH) for transmitting a dedicated channel (DCH), a physical downlink shared channel (PDSCH) for transmitting a downlink shared channel (DSCH), a high speed physical downlink shared channel (HS-PDSCH) for transmitting a high speed downlink shared channel (HS-DSCH), and a physical random access channel (PRACH) for transmitting a random access channel (RACH). In addition to the above physical channels, there is a pilot channel (PCH), which is a pure physical channel that does not transmit upper layer data or control signaling, a primary synchronization channel (P-SCH), a secondary synchronization channel (S-SCH), a paging indicator channel (PICH), an acquisition indicator channel (AICH), and a physical common packet channel (PCPCH).

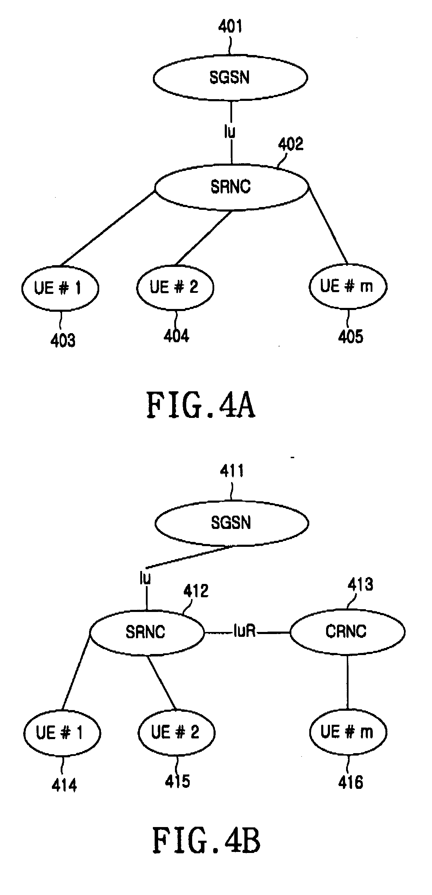

With reference to FIGs. 4A, 4B. 5, and 6, a description will be made herein below of some problems that may occur when an MBMS service is provided in a conventional mobile communication system that does not support the MBMS service.

FIG. 4A schematically illustrates a configuration for providing an MBMS service in a mobile communication system to which an SGSN 401, a servicing radio network controller (SRNC) 402, and UEs (UE#1 403, UE#2 404,..., UE#m 406) are connected. Referring to FIG. 4A, an SGSN 401 has the same function as the SGSN 103 described in conjunction with FIG. 1. An RNC is classified into an SRNC and a controlling RNC (CRNC) according to the connecting relation with the UE. The SRNC is an RNC having all information on the UE, and assigns a serving radio network temporary identifier (S-RNTI) to the UE. When the UE moves to a new cell and the new cell is controlled by a particular RNC, not by the SRNC, the RNC serves as a CRNC, and the CRNC assigns a cell radio network temporary identifier (C-RNTI) to the UE and manages the UE. In FIG. 4A, UE#1 403, UE#2 404, ···, UE#m 406 receive MBMS data from the SRNC 402, and also receive from the SRNC 402 data, if any, transmitted over a dedicated control channel (DCCH) or a dedicated traffic channel (DTCH).

FIG. 4B schematically illustrates a configuration for providing an MBMS service in a mobile communication system to which an SGSN 411, a SRNC 412, a CRNC 413, and UEs 414, 415, and 416 are connected. It will be assumed in FIG. 4B that UE#m 416 has moved to another cell after sending an MBMS service request to the SRNC 412, which is an SRNC for the UE#m 416, so that judging from a view of the UE#m 416, a RNC which controls the UE#m 416 can be the CRNC 413.

Referring to FIG. 4B, the SGSN 411 also has the same function as the SGSN 103 illustrated in FIG. 1. A UE#1 414 and a UE#2 415 receive MBMS data or data transmitted over a DCCH or a DTCH from the SRNC 412. UE#m 416 is connected to the CRNC 413, and receives requested MBMS data from the SRNC 412 via the CRNC 413. Describing a relation between the CRNC 413 and the UE#m 416, the CRNC 413 can directly transmit to the UE#416 such signals as system information, i.e., signals transmitted over a common traffic channel (CTCH) or a common control channel (CCCH). However, the CRNC 413 receives control signaling and user information transmitted from the SRNC 412 over the DCCH and the DTCH except for the CTCH or the CCCH, and transmits the received control signaling and user data to the UE#m 416. In addition, an interface between the CRNC 413 and the SRNC 412 is an Iur interface, through which no signal can be transmitted except for the signals transmitted over the DTCH or the DCCH.

Although it is assumed in FIG. 4B that the CRNC 413 manages only one UE, i.e., UE#m 416, a plurality of UEs can simultaneously be managed by the CRNC 413 and the SRNC 412 in an actual situation. In this case, the UEs simultaneously being managed by the CRNC and the SRNC must unconditionally receive MBMS data via the Iur interface in order to satisfy the standard specification proposed in the 3GPP. When all the UEs simultaneously having the CRNC and the SRNC receive the same MBMS data, i.e., when the same MBMS data is provided to the respective UEs via the Iur interface, the same MBMS data is repeatedly transmitted, which causes a waste of wired resources. In addition, even though the CRNC provides the same MBMS service, the CRNC cannot directly transmit MBMS data to the UEs having the CRNC, so the same MBMS data is transmitted to the UEs having the CRNC and the UEs having the SRNC through a radio environment, thereby causing a waste of radio resources.

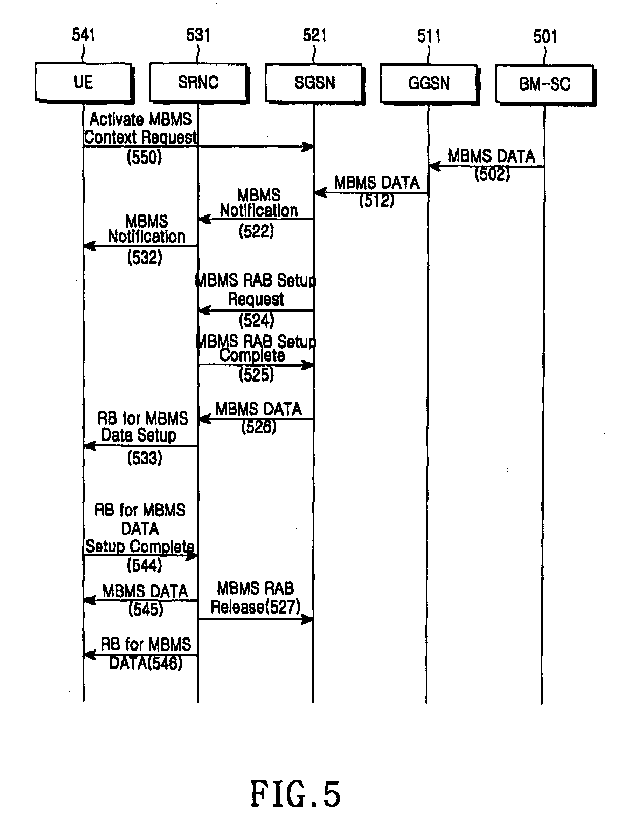

FIG. 5 is a signaling diagram illustrating a procedure for providing an MBMS service in a mobile communication system connected as illustrated in FIG. 4A. It will be assumed in FIG. 5 that an SRNC 531 is not currently providing an MBMS service requested by a UE 541, i.e., the SRNC 531 sends a request for the requested MBMS service to an SGSN 521 in response to an MBMS service request from the UE 541, and the UE 541 receives the requested MBMS service From the SGSN 521.

Referring to FIG. 5, a BM-SC 501 transmits MBMS data to a GGSN 511 (Step 502), and the GGSN 511 transmits MBMS data needed in the SGSN 521, extracted from the MBMS data, to the SGSN 521 (Step 512). Meanwhile, the UE 541 transmits an Activate MBMS Context Request message to the SGSN 521 in order to receive an MBMS service (Step 550). Here, the "MBMS context" represents a set of information related to an MBMS service that the UE 541 desires to receive. Upon receiving the Activate MBMS Context Request message, the SGSN 521 transmits to the SRNC 531 an MBMS Notification message, which is a response message for the Activate MBMS Context Request message (Step 522). Upon receiving the MBMS Notification message, the SRNC 531 transmits an MBMS Notification message to the UE 541 (Step 532). Here, the "MBMS Notification" indicates that an MBMS service requested by the UE 541 is to be performed. The SGSN 521 has an MBMS context, and the contents of the MBMS context can become a list of packet data protocols (PDPs) for a plurality of MBMS services that can be served by the SGSN 521. The PDP list can include addresses for the MBMS services, and such packet protocols as X.25 or IP (Internet Protocol) can be used as the PDP. The SGSN 521 transmits to the SRNC 531 an MBMS RAB Setup Request message for requesting setup of a radio access bearer (RAB) in order to transmit MBMS data (Step 524). Upon receiving the MBMS RAB Setup Request message, the SRNC 531 transmits to the SGSN 521 an MBMS RAB Setup Complete message, which is a response message for the MBMS RAB Setup Request message (Step 525). The SGSN 521 transmits the MBMS data to the SRNC 531 through the set MBMS RAB (Step 526). The SRNC 531 transmits to the UE 541 an RB for MBMS data Setup message for requesting setup of a radio bearer (RB) over which the MBMS data can be transmitted to the UE 541 (Step 533). Upon receiving the RB for MBMS data Setup message, the UE 541 transmits to the SRNC 531 an RB for MBMS data Setup Complete message as a response message for the RB for MBMS data Setup message (Step 544). Upon receiving the RB for MBMS data Setup Complete message, the SRNC 531 transmits MBMS data to the UE 541 (Step 545). In the meantime, if the ongoing MBMS service is suspended, the SRNC 531 releases an MBMS RAB set up to the SGSN 521 to provide the MBMS service (MBMS RAB Release) (Step 527), and releases an MBMS RB set up to the UE 541 to provide the MBMS service (RB for MBMS data Release) (Step 546).

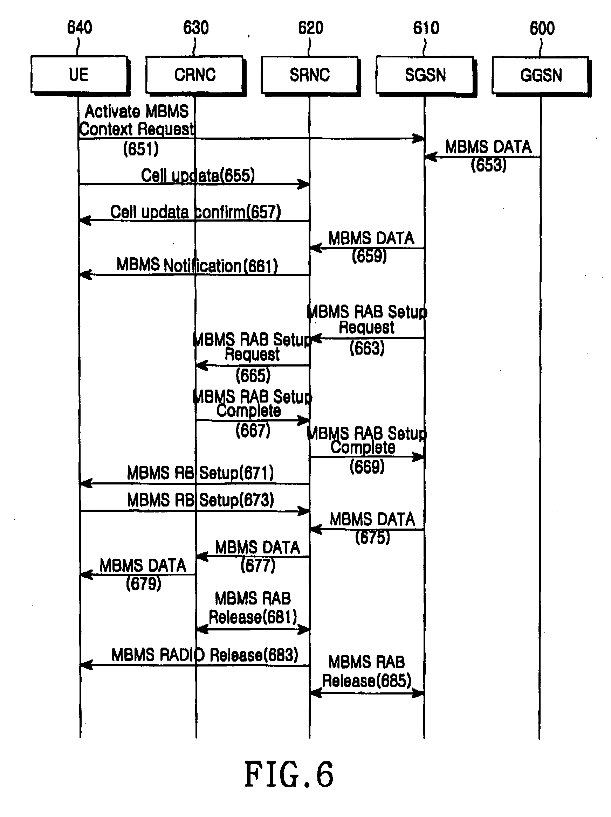

FIG. 6 is a signaling diagram illustrating a procedure for providing an MBMS service in a mobile communication system connected as illustrated in FIG. 4B. It will be assumed in FIG. 6 that a UE 640 simultaneously has a CRNC 630 and a SRNC 620 as the UE 640 moved to a new cell after transmitting an Activate MBMS Context Request message to a SRNC 620, and the UE 640 does not exchange DCH signals with the SRNC 620. A connection relation between the UE 640 and a UTRAN is roughly divided into an idle mode and a connection mode. The connection mode is divided into a URA_PCH state, a CELL_PCH state, a CELL_EACH state, and a CELL_DCH state according to the type of transport channels used when the UE 640 exchanges signals with the UTRAN. In the URA-PCH state, the UTRAN does not know a position of the UE 640, and the UE 640 receives only a PCH signal. In the CELL_PCH state, the UTRAN knows in which cell the UE 640 is located, but the UE 640 continues to receive only the PCH signal. In the CELL_FACH state, the UE 640 exchanges signals with the UTRAN over RACH and FACH. In the CELL_DCH state, the UE 640 exchanges signals with the UTRAN over DCH. In describing FIG. 6, it is assumed that the UE 640 is in the CELL_FACH state and the SGSN 610 has already received necessary MBMS data from a GGSN 600.

Referring to FIG. 6, the UE 640 transmits an Activate MBMS Context Request message to the SGSN 610 (Step 651). In addition, the GGSN 600 transmits MBMS data to the SGSN 610 (Step 653). Further, the UE 640, which has moved to a cell managed by the CRNC 630 in the CELL_EACH state, transmits a Cell Update message to the SRNC 620 (Step 655). Upon receiving the Cell Update message, the SRNC 620 transmits to the UE 640 a Cell Update Confirm message as a response message for the Cell Update message (Step 657).

Upon receiving the Activate MBMS Context Request message from the UE 640, the SGSN 610 transmits an MBMS Notification message to the SRNC 620 (Step 659). The SRNC 620 transmits an MBMS Notification message to the CRNC 630, and the CRNC 630 transmits the MBMS Notification message intact to the UE 640 without knowing the contents of the MBMS Notification message (Step 661). Here, the CRNC 630 provides radio resources for the UE 640 and simply relays signals transmitted and received to/from the SRNC 640.

After transmitting the MBMS Notification message, the SGSN 610 transmits an MBMS RAB Setup Request message to the SRNC 620 (Step 663). Because the UE 640 currently exists in a cell managed by the CRNC 630, the SRNC 620 transmits an MBMS RAB Setup Request message to the CRNC 630 (Step 665). Upon receiving the MBMS RAB Setup Request message, the CRNC 630 transmits to the SRNC 620 an MBMS RAB Setup Complete message, a response message for the MBMS RAB Setup Request message (Step 667). Upon receiving the MBMS RAB Setup Complete message from the CRNC 630, the SRNC 620 transmits an MBMS RAB Setup Complete message to the SGSN 610 (Step 669). In addition, the SRNC 620 transmits an MBMS RB Setup message to the UE 640 (Step 671). The UE 640 transmits to the SRNC 620 an MBMS RB Setup Complete message as a response message for the MBMS RB Setup message (Step 673). The SGSN 610 transmits MBMS data to the SRNC 620 (Step 675), and the SRNC 620 transmits the MBMS data to the CRNC 630 (Step 677). The CRNC 630 transmits the MBMS data to the UE 640 (Step 679). If the ongoing MBMS service is suspended, the SRNC 620 releases an MBMS RAB set up to the CRNC 630 to provide the MBMS service (MBMS RAB Release) (Step 681), releases an MBMS RB set up to the UE 640 to provide the MBMS service (MBMS RB Release) (Step 683), and releases an MBMS RAB set up to the SGSN 610 (MBMS RAB Release) (Step 685).

A description will now be made of the problems which may occur when an MBMS service is provided to a UE existing in a cell managed by a CRNC in a conventional mobile communication system that does not support the MBMS service as described in conjunction with FIG. 4B.

First, even when all UEs receiving MBMS data from a cell managed by an SRNC have moved, the SRNC must maintain an Iu interface and transmit the data received through the Iu interface to a CRNC to which the UEs have moved, via an Iur interface, thereby causing a waste of resources of the Iu interface between the SRNC and the SGSN. Moreover, if the same MBMS service was being provided in a cell managed by a CRNC, the CRNC repetitively receives MBMS data via the Iu interface between the SRNC and the SGSN even though it has already received the MBMS data to be provided to the UEs in its cell from the SGSN.

Second, since the Iur interface between the CRNC and the SRNC transmits only dedicated data, if multiple UEs using the same MBMS service are under the management of the CRNC, the same MBMS service is unnecessarily repeatedly transmitted from the SRNC to the CRNC. That is, when the MBMS data is commonly provided in the same cell, only dedicated data is transmitted via the Iur interface. Therefore, in an MBMS service where several UEs are serviced all together within one cell, in order to transmit data to moved UEs via the Iur interface upon movement of the UEs, the same data must be repeatedly transmitted as many times as the number of the moved UEs. In this case, even though the CRNC is connected to the SRNC by wire, the same MBMS data requiring a relatively high data rate is repeatedly transmitted causing a waste of wired resources. In addition, the MBMS data uses different radio resources, thus causing a waste of radio resources. In radio communication, the efficient use of radio resources is a very important factor, and the waste of radio resources affects the existing voice service and other services. This adds the repetitive operations, if the MBMS service was being served in the CRNC. At present, because an Iur interface for common data has not been defined yet, the MBMS service causes a considerable waste of wired and wireless resources.

Third, even though the CRNC is already providing an MBMS service requested by the UEs having the CRNC, there is no way to directly transmit data to the UEs. Therefore, the same service is repeatedly transmitted to the UEs having the CRNC as the SRNC and the UEs having the CRNC as the CRNC. Since the UE that has moved from the SRNC to the CRNC must receive data from the SRNC via the Iur interface through the CRNC, even though the CRNC has the same data as the same MBMS service is being served in a CRNC's cell, the CRNC cannot provide the data to the UEs that have moved from the SRNC.

### SUMMARY OF THE INVENTION

It is, therefore, an object of the present invention to provide an apparatus and method for providing an MBMS service when a UE is handed over from an SRNC to a CRNC in an MBMS mobile communication system.

It is another object of the present invention to provide an apparatus and method for providing an MBMS service without a separate Iur interface between an SRNC and a CRNC when a UE is handed over from the SRNC to the CRNC in an MBMS mobile communication system.

It is further another object of the present invention to provide an apparatus and method for efficiently managing wired/wireless resources for an MBMS service in an MBMS mobile communication system.

It is yet another object of the present invention to provide an apparatus and method for managing a new MBMS context for efficient wired/wireless resource management in an MBMS mobile communication system.

It is still another object of the present invention to provide an apparatus and method for efficiently managing wired/wireless resources by defining a new message between an SRNC and a CRNC in an MBMS mobile communication system.

It is still another object of the present invention to provide an apparatus and method for managing a MAC layer that is compatible with an existing MAC layer in an MBMS mobile communication system.

It is still another object of the present invention to provide an apparatus and method for separately transmitting/receiving a data signal and a control signal according to mobility of UEs in an MBMS mobile communication system.

To achieve the above and other objects, the present invention provides a method for providing a packet service to a user equipment (UE) when the UE moves to a second cell managed by a second radio network controller (RNC), the UE requesting a permission to receive the packet service in a first cell managed by a first RNC, in a mobile communication system providing the packet service. The method comprises the steps of: transmitting by the first RNC control information necessary for providing the packet service to the UE, to the second RNC; analyzing by the second RNC the control information and notifying the first RNC that the second RNC is providing the packet service, when the second RNC can provide the packet service; and transmitting by the second RNC the packet service data to the UE.

To achieve the above and other objects, the present invention provides a method for providing a packet service to a user equipment (UE) when the UE moves to a second cell managed by a second radio network controller (RNC), the UE requesting a permission to receive the packet service in a first cell managed by a first RNC, in a mobile communication system providing the packet service. The method comprises the steps of: transmitting by the first RNC a UE identifier of the UE, a service identifier indicating the packet service, and information on a radio resource currently set up to the UE, to the second RNC; receiving by the second RNC the UE identifier, the service identifier and the radio resource information, and notifying the first RNC that the second RNC is providing the packet service when the second RNC can provide a packet service indicated by the packet service identifier; and transmitting by the second RNC the packet service data to the UE.

To achieve the above and other objects, the invention provides an apparatus for providing a packet service to a user equipment (UE) when the UE moves to a second cell managed by a second radio network controller (RNC), the UE requesting a permission to receive the packet service in a first cell managed by a first RNC, in a mobile communication system providing the packet service. The apparatus comprises the first RNC for transmitting control information necessary for providing the packet service to the UE requesting the packet service, to the second RNC; and the second RNC for receiving the control information from the first RNC, analyzing the control information, notifying the first RNC that the second RNC is providing the packet service when the second RNC can provide the packet service, and transmitting the packet service data to the UE.

To achieve the above and other objects, the invention provides an apparatus for providing a packet service to a user equipment (UE) when the UE moves to a second cell managed by a second radio network controller (RNC), the UE requesting a permission to receive the packet service in a first cell managed by a first RNC, in a mobile communication system providing the packet service. The apparatus comprises the first RNC for transmitting to the second RNC a UE identifier of the UE, a service identifier indicating the requested packet service, and information on a radio resource currently set up by the UE; and the second RNC for receiving the UE identifier, the service identifier and the radio resource information, notifying the first RNC that the second RNC is providing the packet service when the second RNC can provide the packet service, and transmitting the packet service data to the UE.

### BRIEF DESCRIPTION OF THE DRAWINGS

The above and other objects, features, and advantages of the present invention will become more apparent from the following detailed description when taken in conjunction with the accompanying drawings in which:
FIG. 1 schematically illustrates a structure of a mobile communication system for providing an MBMS service;
FIG. 2 schematically illustrates a structure of the UTRAN illustrated in FIG. 1;
FIG. 3 schematically illustrates a structure of an upper layer of the UTRAN illustrated in FIG. 1;
FIG. 4A schematically illustrates a configuration for providing an MBMS service in a mobile communication system to which an SGSN, an SRNC, and UEs are connected;
FIG. 4B schematically illustrates a configuration for providing an MBMS service in a mobile communication system to which an SGSN, a SRNC, a CRNC and UEs are connected;
FIG. 5 is a signaling diagram illustrating a procedure for providing an MBMS service in a mobile communication system connected as illustrated in FIG. 4A;
FIG. 6 is a signaling diagram illustrating a procedure for providing an MBMS service in a mobile communication system connected as illustrated in FIG. 4B;
FIG. 7 schematically illustrates a configuration of a mobile communication system providing an MBMS service according to an embodiment of the present invention;
FIG. 8 is a signaling diagram illustrating a procedure for providing an MBMS service to a UE during handover from an SRNC to a CRNC according to an embodiment of the present invention;
FIG. 9 is a flowchart illustrating a procedure for providing an MBMS service by an SGSN according to an embodiment of the present invention;
FIG. 10 is a flowchart illustrating a procedure for performing an MBMS service by an SRNC according to an embodiment of the present invention;
FIG. 11 is a flowchart illustrating a procedure for providing an MBMS service by a CRNC according to an embodiment of the present invention;
FIG. 12 is a flowchart illustrating a procedure for providing an MBMS service by a UE according to an embodiment of the present invention;
FIG. 13 is a flowchart illustrating a procedure for managing an MBMS context by an SGSN according to an embodiment of the present invention;
FIGs. 14A, 14B, 15, and 16 are flowcharts illustrating an MBMS context management procedure by an RNC according to an embodiment of the present invention; and
FIG. 17 schematically illustrates a structure of an L2/MAC layer for directly transmitting MBMS data from a CRNC to a UE according to an embodiment of the present invention.

### DETAILED DESCRIPTION OF THE PREFERRED EMBODIMENT

Several preferred embodiments of the present invention will now be described in detail herein below with reference to the annexed drawings. In the following description, a detailed description of known functions and configurations incorporated herein has been omitted for conciseness.

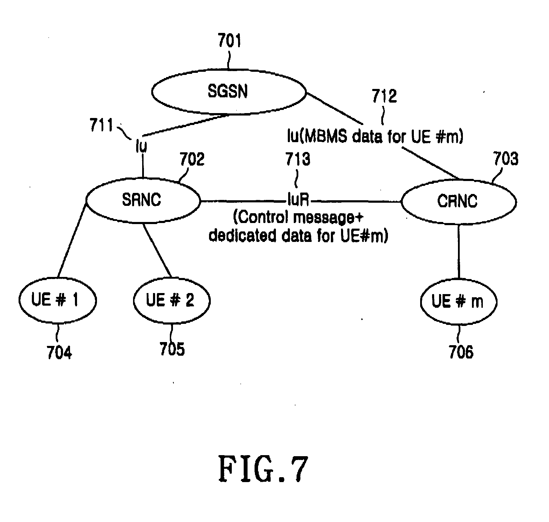

FIG. 7 schematically illustrates a configuration of a mobile communication system providing an MBMS service according to an embodiment of the present invention. FIG. 7 will be described on the following assumptions. That is, a user equipment (UE) transmitted an Activate MBMS Context Request message in a serving radio network controller (SRNC), transmitted a Cell Update Confirm message after moving to a cell managed by a controlling RNC (CRNC), received an MBMS Notification message for an MBMS service from a serving GPRS support node (SGSN), and transmitted a Paging Response message for the MBMS Notification message. Here, transmitting the Paging Response message is an optional process performed depending on an operation method by a network operator.

Referring to FIG. 7, an SGSN 701 is connected to an SRNC 702 and a CRNC 703 via an Iu interface 711 and an Iu interface 712, respectively. Here, the Iu interface indicates an interface between an SGSN and an RNC. The SGSN 701 transmits to the SRNC 702 MBMS data for UEs existing in cells managed by the SRNC 702, i.e., UE#1 704 and UE#2 705, and the CRNC 703 transmits MBMS data for the UE#m 706 so that the UE#m 706 can receive MBMS data under the control of the CRNC 703. The UE#m 706 is controlled by the SRNC 702, for control by a network and other services except an MBMS service, such as a radio bearer (RB) or a radio access bearer (RAB). That is, in providing an MBMS service to the UE#m 706, the invention transmits a control message via the SRNC 702 and the Iur interface 713, and transmits actual MBMS data via the CRNC 703. In other words, the invention proposes a service method for separating a control message transmission path and an MBMS data transmission path when a UE receiving MBMS service via an SRNC has moved to a cell managed by the CRNC. However, an operation caused by the separation of the control message transmission path and the MBMS data transmission path will be described later.

The other services and a control message by the network are delivered to the UE#m 706 via an Iur interface 713 between the SRNC 702 and the CRNC 703. Here, the Iur interface represents an interface between RNCs. The UE#m 706 receives MBMS data via the CRNC 703. Because the MBMS data is delivered to the UE#m 706 via the CRNC 703, it is possible to save wired resources of an Iur bearer between the SRNC 702 and the CRNC 703, and because the CRNC 703 directly provides the MBMS service to the UE#m 706, the CRNC 703 can more efficiently manage wireless resources of cells managed by the CRNC 703 itself.

A description will now be made of (1) the contents of contexts to be created by entities, i.e., SGSN, SRNC, and CRNC, due to separation of a control message transmission path and an MBMS data transmission path upon movement of a UE in providing the MBMS service, (2) a signaling flow between the respective entities, and (3) a structure of the respective entities.

A mobile communication system according to an embodiment of the present invention has a different MBMS context format from the conventional MBMS mobile communication system. The MBMS context represents the contents necessary for providing an MBMS service, and respective entities existing in a network for providing the MBMS service store the MBMS context according to their roles. The MBMS contexts possessed by the SGSN, the SRNC, the CRNC, and the UEs may have different contents. Table 5 below shows new parameters for storing an MBMS context proposed in the invention.

**Table 5**

| Element | Existing Function | Added Function | Description |
|---|---|---|---|
| SGSN | MM context for each UE, MBMS PDP context for each MBMS service | MM context for each UE + MBMS PDP context for each with MBMS service UE ID list | - MM (Mobile Management) context for each UE is same as before. - RNC list of RNCs providing the MBMS service is added for each MBMS service. -For more detail, see FIG. 13. |
| SRNC | UE context | UE context with MBMS information | - MBMS service ID of MBMS service being provided to the UE is added to previously managed UE context. |
| | | | - For more detail, see FIGS. 14, 15 and 16. |
| CRNC | none | MBMS context for each service | - Conventionally, there is no MBMS context for UE under CRNC. Even though there exists an MBMS context, it has the contents simply related to radio resource assignment. - As for the newly added contents, a UE list is added for each MBMS service. - For more detail, see FIGs. 14, 15 and 16. |

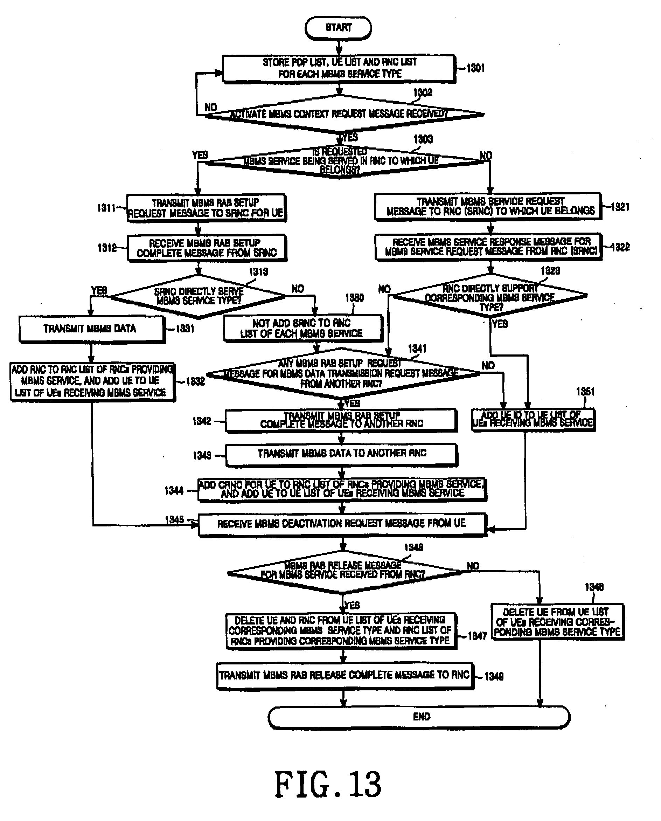

As illustrated in Table 5, the contents of an MBMS context possessed by each of the SGSN, the SRNC, and the CRNC include newly added parameters in addition to the parameters as the contents of an MBMS context managed in the conventional MBMS communication system. A detailed description of the MBMS context of Table 5 will be described later with reference to FIGS. 13 to 16. The contents of an MBMS context for a UE in the present invention are identical to the contents of an MBMS context in the conventional MBMS communication system. Therefore, they are not shown in Table 5.

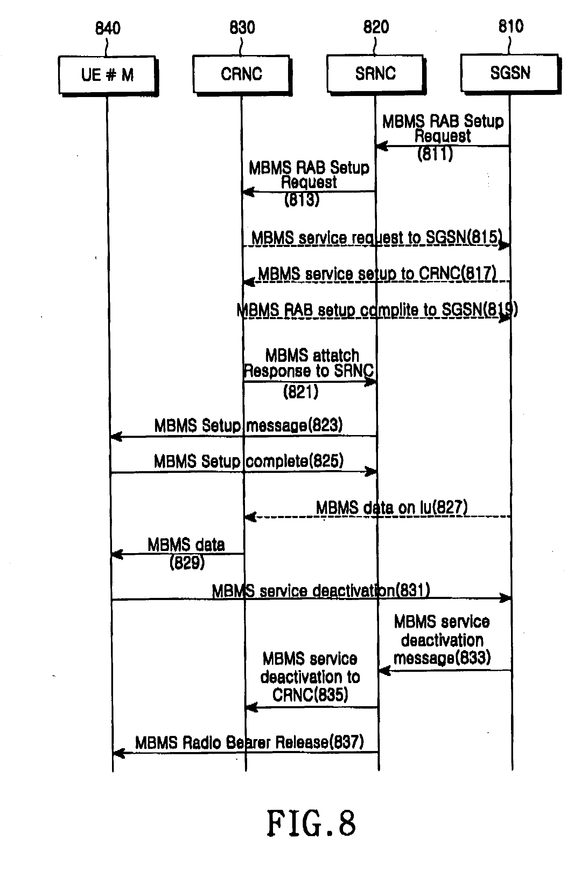

FIG, 8 is a signaling diagram illustrating a procedure for providing an MBMS service to a UE during handover from an SRNC to a CRNC according to an embodiment of the present invention. A description of FIG. 8 will be made on the assumption that an MBMS service requested by a UE#m 840 is not currently being served in a CRNC 830, and the UE#m 840 transmitted an Activate MBMS Context Request message in an SRNC 820, transmitted a Cell Update Confirm message after moving to a cell managed by the CRNC 830, received an MBMS Notification message from an SGSN 810, and transmitted a Paging Response message for the MBMS Notification message. Here, transmitting the Paging Response message is an optional process performed depending on an operation method by a network operator.

Referring to FIG, 8, the SGSN 810 transmits to the SRNC 820 an MBMS RAB Setup Request message for requesting setup of a RAB for transmitting MBMS data (Step 811). Upon receiving the MBMS RAB Setup Request message from the SGSN 810, the SRNC 820 transmits an MBMS Attach Request message to the CRNC 830 that manages a cell where the UE#m 840 is located, because the SRNC 820 detects that the UE#m 840 requesting the MBMS service does not exist in a cell managed by the SRNC 820 itself (Step 813). Here, the MBMS Attach Request message is a message newly proposed in the invention, which is needed by the SRNC to request the CRNC to provide the MBMS service even to a moved UE in order to provide the MBMS service to the UE having moved from the SRNC to the CRNC.

Upon receiving the MBMS Attach Request message, the CRNC 830 performs an operation of transmitting MBMS data even to a moved UE, i.e., the UE#m 840, as the UE desiring to receive the MBMS service, i.e., UE#m 840, moves to a cell managed by the CRNC 830. Specifically, information that must be transmitted by the SRNC 820 to the CRNC 830 through the MBMS Attach Request message includes a UE identifier (ID) of the UE#m 840, an MBMS service ID requested by the UE#m 840, and RB information for transmitting a control message corresponding to the MBMS service ID. An RB for transmitting the control message includes, for example, a dedicated control channel (DCCH). and in this case, the RB information becomes DCCH-related information. Here, the UE ID for the UE#m 840 indicates that the UE#m 840 receives an MBMS service from the CRNC 830, and the MBMS service ID indicates a type of the MBMS service to be received by the UE#m 840. The RB information is information that can be used in setting up a format of a dedicated channel (DCH) when the CRNC 830 provides an MBMS service on a point-to-point (PtP) basis, i.e., when the CNRC 830 provides an MBMS service using the DCH.

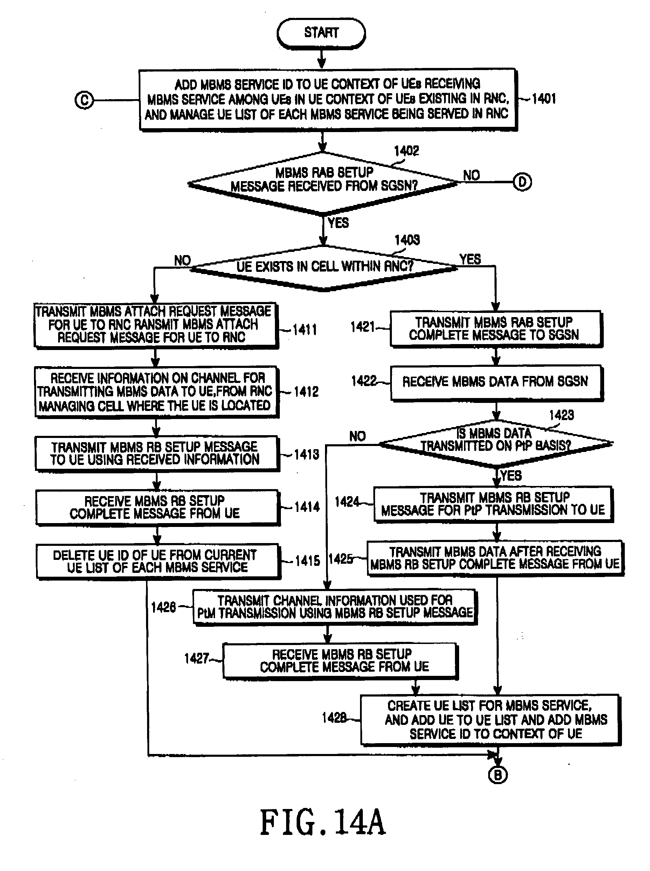

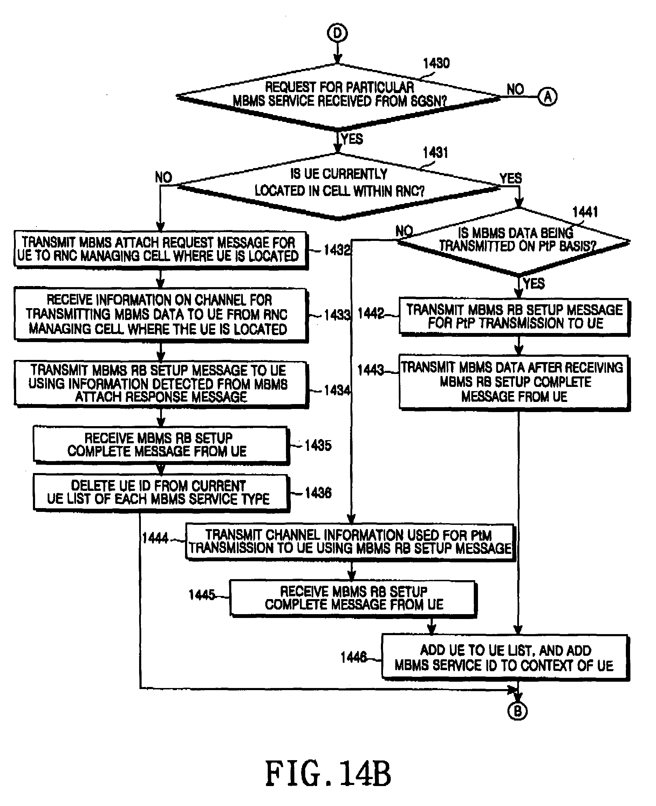

Upon receiving the MBMS Attach Request message, the CRNC 830 transmits to the SGSN 810 an MBMS Service Request message since it does not have MBMS data related to the requested MBMS service (Step 815). Because it is assumed herein that the CRNC 830 is not providing the MBMS service, the CRNC 830 sends an MBMS service request to the SGSN 810 in order to providing the MBMS service to the moved UE#m 840. That is, because an Iu interface that must be set up to provide the MBMS service is not currently set up between the CRNC 830 and the SGSN 810, the CRNC 830 must request setup of the Iu interface. An operation performed when the CRNC 830 is providing the requested MBMS service will be described later with reference to FIGs. 14 to 16.

Upon receiving the MBMS Service Request message, the SGSN 810 attaches an ID of the CRNC 830 to an MBMS packet data protocol (PDP) context, and then transmits an MBMS RAB Setup Request message to the CRNC 830 in order to transmit the requested MBMS data (Step 817). By doing so, an Iu interface for the MBMS service between the CRNC 830 and the SGSN 810 is set up. Here, the MBMS PDP context is a PDP context generated according to MBMS service types. The CRNC 830 transmits to the SGSN 810 an MBMS RAB Setup Complete message in response to the MBMS RAB Setup Request message (Step 819). As described above, in steps 817 and 819, because the CRNC 830 does not provide the MBMS service, the CRNC 830 sends a request for information on RAB set up for the MBMS service to the SGSN 810 and the RAB is set up accordingly. In addition, the CRNC 830 transmits an MBMS Attach Response message to the SRNC 820 (Step 821). Also, the MBMS Attach Response message is a message newly proposed in the invention, which is a response message for the MBMS Attach Request message. The MBMS Attach Response message is a message used by the CRNC 830 in attaching a moved UE, i.e., the UE#m 840, to a CRNC context managed by the CRNC 830 and then, informing the SRNC 820 that an Iu interface between the SGSN 810 and the CRNC 830 is set up. Here, the MBMS Attach Response message includes RB information to be used by the CRNC 820 for MBMS data transmission. Therefore, the SRNC 820 transmits an RB Setup message to the UE#m 840 according to the RB information (Step 823). Upon receiving the RB Setup message, the UE#m 840 transmits an RB Setup Complete message to the SRNC 820 in response to the received RB Setup message (Step 825) so that the SRNC 820 notifies completed setup of the RB. Thereafter, the CRNC 830 receives MBMS data from the SGSN 810 via an Iu interface (Step 827), and transmits the received MBMS data to the UE#m 840 (Step 829). As a result, in the present invention, the CRNC 830 can directly receive MBMS data from the SGSN 810 via the Iu interface.

The UE#m 840, if it desires not to receive the ongoing MBMS service any longer, transmits an MBMS Service Deactivation message to the SGSN 810 (Step 831). Upon receiving the MBMS Service Deactivation message, the SGSN 810 transmits an MBMS Service Deactivation message to the SRNC 820 (Step 833), and the SRNC 820 transmits again the MBMS Service Deactivation message to the CRNC 830 (Step 835). In addition, the SRNC 820 transmits an MBMS RB Release message to the UE#m 840 (Step 837). Also, the MBMS Service Deactivation process will be described later with reference to FIGs. 14 to 16. As described above, it is noted that the moved UE#m 840 is controlled by transmitting control information via the SRNC 820, and the MBMS data is transmitted via the CRNC 830. That is, a control message path is separated from a data transmission path.

The embodiment of the present invention described in conjunction with FIGS. 7 and 8 has the following advantages.
1. Unnecessary transmission of the same MBMS data from the SRNC to the CRNC is prevented, thereby increasing efficiency of wired resources and network management. That is, as described above, unnecessary repeated transmission for the same MBMS data on an Iur interface, which is an interface between the SRNC and the CRNC, is prevented, and the SRNC transmits only a control message and the CRNC transmits MBMS data, thereby securing efficient utilization of wired/wireless resources.
2. Because MBMS data of a UE having the CRNC as a CRNC is directly transmitted from the SGSN to the CRNC, unnecessary data transmission to the SRNC by the UE is prevented thereby securing efficiency of wired resources and network management. That is, if all UEs receiving an MBMS service from the SRNC have moved, MBMS data is transmitted via only the CRNC and MBMS data transmission to the SRNC is unnecessary. Conventionally, even though all UEs receiving an MBMS service from the SRNC have moved, since data must be transmitted via the SRNC, MBMS data transmission from the SGSN to the SRNC was required. However, according to the present invention, unnecessary transmission of MBMS data from the SGSN to the SRNC is not required.
3. The CRNC can directly manage an MBMS service for UEs having the CRNC as a CRNC and UEs having the CRNC as an SRNC, thereby efficiently utilizing wired and wireless resources and managing a network.

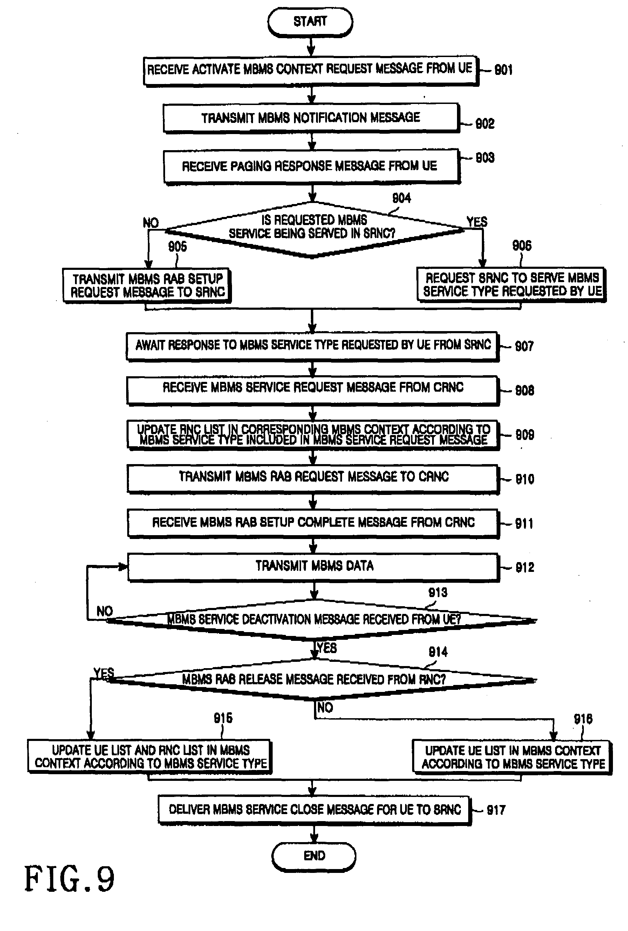

FIG. 9 is a flowchart illustrating a procedure for providing an MBMS service by an SGSN according to an embodiment of the present invention. Referring to FIG. 9, in step 901, the SGSN receives an Activate MBMS Context Request message from a particular UE. The Activate MBMS Context Request message is a message used by the UE in requesting a particular type of an MBMS service among a plurality of MBMS services provided by the SGSN. Upon receiving the Activate MBMS Context Request message, the SGSN determines whether the MBMS service type requested by the UE is an MBMS service type available to the UE by searching a home location register (HLR). As a result of the determination, in step 902, if the MBMS service type requested by the UE is an MBMS service type available to the UE, the SGSN transmits to the UE an MBMS Notification message notifying that the MBMS service type requested by the UE is available and the requested MBMS service type will be initiated soon.

In step 903, the SGSN receives a Paging Response message transmitted from the UE in response to the transmitted MBMS Notification message. The process of receiving a Paging Response message in response to the transmitted MBMS Notification message, as mentioned above, can be optionally selected according to system operation.

Upon receiving the Paging Response message from the UE, the SGSN determines in step 904 whether the MBMS service type requested by the UE is being served in an RNC to which the UE currently belongs. Whether the MBMS service type requested by the UE is being served in an RNC to which the UE currently belongs can be determined by a list of RNCs providing the MBMS service in an MBMS context stored in the SGSN. If the MBMS service type requested by the UE is not being served in an RNC to which the UE currently belongs, the SGSN proceeds to step 905. In step 905, the SGSN transmits an MBMS RAB Setup Request message to an SRNC for the UE in order to provide the requested MBMS service type. However, if it is determined in step 904 that the MBMS service type requested by the UE is being served in an SRNC to which the UE currently belongs, the SGSN proceeds to step 906. In step 906, the SGSN requests the SRNC for the UE to serve the requested MBMS service type to the UE. When requesting the SRNC for the UE to serve the requested MBMS service type to the UE, the SGSN can manage the current MBMS service providing situation for the UE by attaching an ID of the MBMS service requested by the UE to an MM (Mobile Management) context for the UE.

In step 907, the SGSN awaits a response to the MBMS service type requested by the UE from the SRNC for the UE. In the embodiment of the present invention, because it is assumed that the UE is located in a cell managed by the SRNC, not by the CRNC, the SGSN fails to receive a response from the SRNC. Therefore, the SGSN receives, through an MBMS RAB Setup Complete message or another message capable of transmitting the contents to the SGSN, a response indicating whether a service for the UE is provided by the SRNC after the SRNC completed a related operation with the CRNC for the UE or a request for the service is sent to another RNC. Furthermore, in the embodiment of the present invention, it is assumed that the MBMS service requested by the UE is not served in the CRNC, the SGSN receives in step 908 an MBMS Service Request message from the CRNC. In step 909, the SGSN updates an RNC list in such a manner that an ID or the CRNC is added to the RNC list of each MBMS service type, managed by the SGSN. In step 910, the SGSN transmits an MBMS RAB Setup Request message for transmission of the MBMS data to the CRNC. In step 911, the SGSN receives an MBMS RAB Setup Complete message from the CRNC.

In step 912, the SGSN transmits the MBMS data provided by a multicast/broadcast-service center (BM-SC) to the CRNC. In step 913, the SGSN continuously monitors whether an MBMS Service Deactivation message from the UE, In the meantime, if the MBMS Service Deactivation message is received, the SGSN proceeds to step 914. That is, upon receiving the MBMS Service Deactivation message, the SGSN performs an operation of removing an MBMS service ID from an MM context of the UE, managed by the SGSN, and then determines in step 914 whether an MBMS RAB Release message for MBMS data transmission is received from a particular RNC connected to the SGSN. If an MBMS RAB Release message for the MBMS data transmission is received from the RNC, the SGSN proceeds to step 915. In step 915, the SGSN updates a list of UEs receiving MBMS services and a list of RNCs providing the respective MBMS services.

If it is determined in step 914 that the MBMS RAB Release message for MBMS data transmission is not received from the RNC, the SGSN proceeds to step 916. In step 916, the SGSN updates a list of UEs receiving the MBMS services, and then proceeds to step 917. In step 917, the SGSN delivers an MBMS service close message for the UE, i.e., an MBMS Service Deactivation message, to the SRNC for the UE, thereby suspending the MBMS service for the UE and ending the procedure.

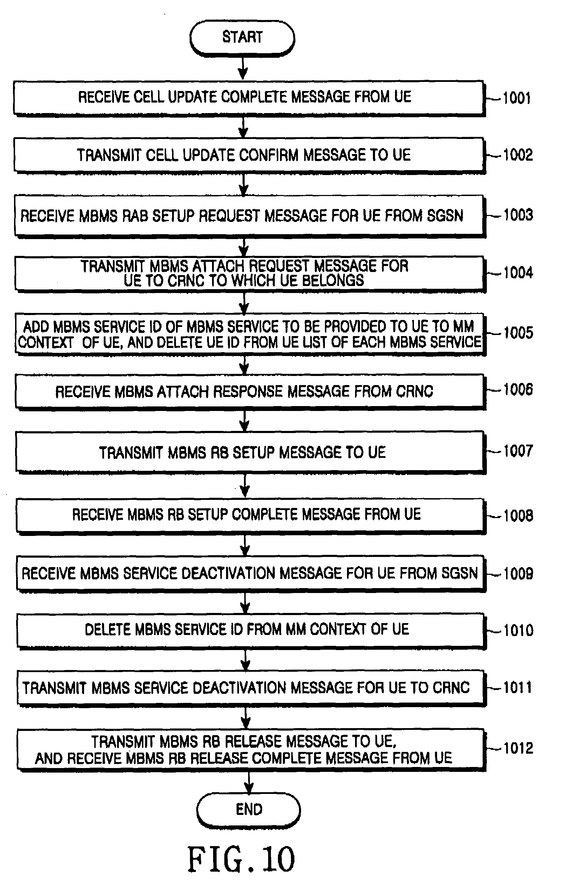

FIG. 10 is a flowchart illustrating a procedure for performing an MBMS service by an SRNC according to an embodiment of the present invention. Referring to FIG. 10, in step 1001, the SRNC receives a Cell Update Complete message from a UE. Upon receiving the Cell Update Complete message from the UE, the SRNC perceives that the UE has a CRNC as it moves to another cell, i.e., as it is handed over. In step 1002, the SRNC transmits a Cell Update Confirm message to the UE to inform that it has perceived movement of the UE to the CRNC, In step 1003, the SRNC receives an MBMS RAB Setup Request message for transmission of MBMS data requested by the UE from the SRNC. In step 1004, the SRNC detects an MBMS service ID requested by the UE, a UE ID of the UE, and RB information over which a control message is being transmitted to the UE, from the received the MBMS RAB Setup Request message, and transmits the detected MBMS service ID, the UE ID and the RB information to the CRNC for the UE along with an MBMS Attach Request message. In step 1005, the SRNC updates an MM context of the UE by adding an MBMS service ID to be received by the UE to the MM context, and deletes the UE ID of the UE from the UE list of each MBMS service type, managed in the SRNC.

In step 1006, the SRNC receives an MBMS Attach Response message from the CRNC. In step 1007, the SRNC detects information on RB to be used in transmitting MBMS data to the UE, included in the MBMS Attach Response message, and transmits an MBMS RB Setup message to the UE based on the detected RB information. In step 1008, the SRNC receives an MBMS RB Setup Complete message corresponding to the MBMS RB Setup message from the UE, and then in step 1009, the SRNC receives an MBMS Deactivation message for the UE from the SGSN. In step 1010, the SRNC deletes the MBMS service ID from the MM context of the UE, and in step 1011, the SRNC transmits an MBMS Service Deactivation message for the UE to the CRNC that provides an MBMS service to the UE. In step 1012, the SRNC transmits to the UE an MBMS RB Release message for releasing MBMS RB used in receiving the MBMS data, thereby ending the procedure.

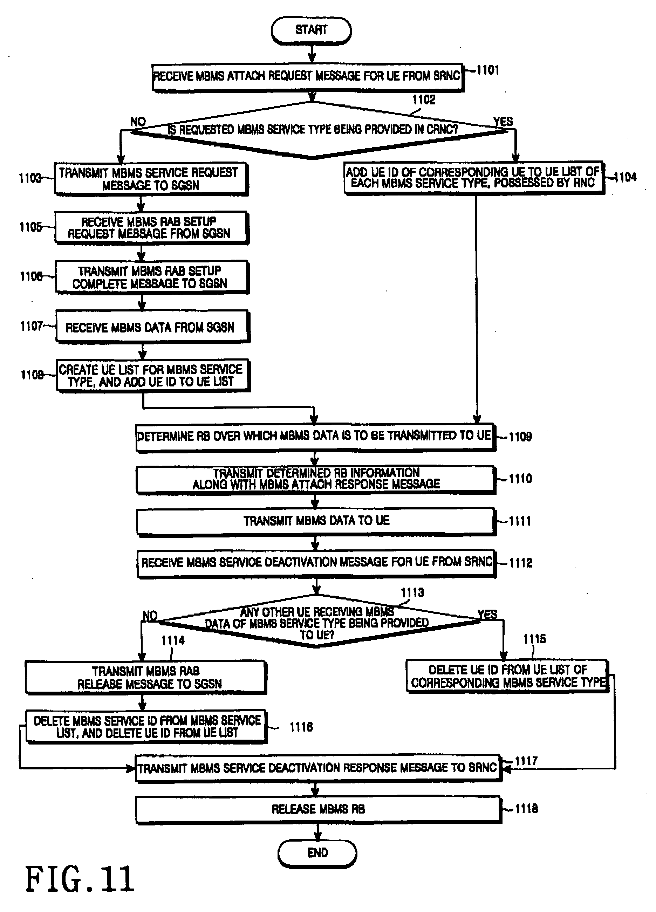

FIG. 11 is a flowchart illustrating a procedure for providing an MBMS service by a CRNC according to an embodiment of the present invention. Referring to FIG. 11, in step 1101, the CRNC receives an MBMS Attach Request message from an SRNC for a UE. The CRNC detects a UE ED of the UE, an MBMS service ID, and DCCH RB information of the UE, included in the MBMS Attach Request message. In step 1102, the CRNC determines whether an MBMS service indicated by the MBMS service ID is currently being served. If an MBMS service indicated by the MBMS service ID is currently being served, the CRNC proceeds to step 1104. In step 1104, the CRNC adds a UE ID of the UE to a UE ID list of each MBMS service type, managed by the CRNC, and then proceeds to step 1109.

However, if it is determined in step 1102 that an MBMS service indicated by the MBMS service ID is not being served, the CRNC proceeds to step 1103. In step 1103, the CRNC transmits an MBMS Service Request message to an SGSN in order to receive the MBMS service, and then proceeds to step 1105. In step 1105, the CRNC receives an MBMS RB Setup Request message needed in receiving the MBMS data from the SGSN. In step 1106, the CRNC transmits an MBMS RB Setup Complete message to the SGSN as a response to the MBMS RB Setup Request message, and then in step 1107, the CRNC receives MBMS data from the SGSN. Alternatively, however, in step 1103, the CRNC may transmit an MBMS RAB Setup Request message to the SGSN while transmitting the MBMS Service Request message. In this case, the SGSN can inform the CRNC that transmission of the MBMS data requested by the CRNC was accepted, through an MBMS Setup Complete message. In step 1108, the CRNC adds a new MBMS service ID to an MBMS list managed by the CRNC, and adds the UE to a UE list of the MBMS service ID, and then proceeds to step 1109.

In step 1109, the CRNC receives MBMS data requested by the UE, determines which RB the MBMS data is to be transmitted over, after adding the requested MBMS service type to a list. In step 1110, the CRNC transmits information on the determined RB to an SRNC for the UE, using an MBMS Attach Response message. In step 1111, the CRNC starts MBMS data transmission for the UE, and in step 1112, the CRNC receives an MBMS Service Deactivation message for the UE from the SRNC for the UE. In step 1113, the CRNC determines whether there are any other UEs receiving an MBMS service type that the UE was receiving. If there is no UE receiving an MBMS service type that the UE was receiving, the CRNC proceeds to step 1114. In step 1114, the CRNC transmits to the SGSN an MBMS RAB Release message for requesting or ordering release of an MBMS RAB previously set up for MBMS data transmission between the CRNC and the SGSN. In step 1116, the CRNC deletes a UE of the UE from the UE list for the MBMS service, or deletes the MBMS service ID from an MBMS service list managed by the CRNC, and then proceeds to step 1117.

However, if it is determined in step 1113 that there is another UE receiving an MBMS service type that the UE was receiving, the CRNC proceeds to step 1115. In step 1115, the CRNC deletes an ID of the UE from a list of the MBMS service that a UE#m was receiving. In step 1117, the CRNC transmits an MBMS Deactivation Response message for the UE to the SRNC for the UE, and then proceeds to step 1118. In step 1118, the CRNC releases a radio resource assigned to the UE, and then ends the procedure. Here, the radio resource is released in a case where the MBMS service was being served on a PtP (point-to-point) basis, and a second case where the MBMS service was being served on a PtM (Point to Multipoint) basis. In the first case, the radio resource assigned to the UE is released, and in the second case, a UE ID of the UE is released from the MBMS list.

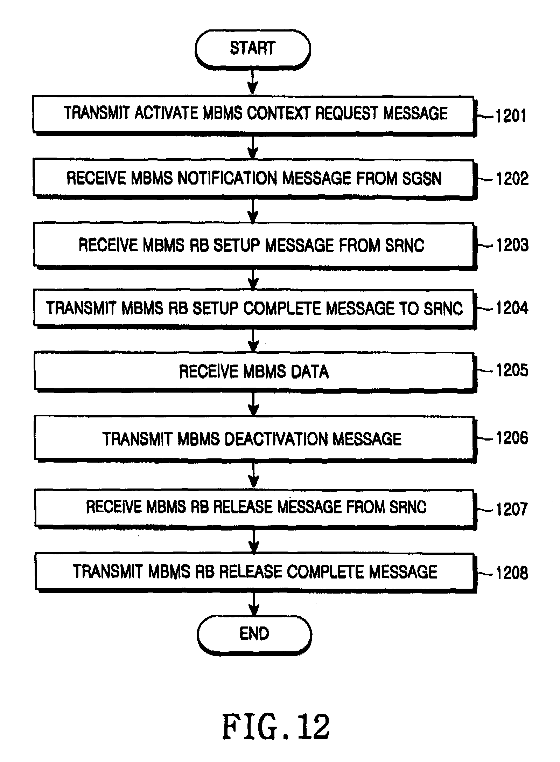

FIG. 12 is a flowchart illustrating a procedure for providing an MBMS service by a UE according to an embodiment of the present invention. Referring to FIG. 12, in step 1201, the UE transmits an Activate MBMS Context Request message to an SGSN. In step 1202, the UE receives from the SGSN an MBMS Notification message notifying that the MBMS service type requested by the UE was permitted and the corresponding MBMS service type will be started soon. Here, the UE may transmit or not transmit a Paging Response message to the SGSN in response to the received MBMS Notification message, and this is optional according to system operation, as mentioned above. In FIG. 12, it is assumed that the Paging Response message for the MBMS Notification message is not transmitted. In step 1203, the UE receives an MBMS RB Setup message for setup of an MBMS RB over which the MBMS data is to be transmitted from the SRNC for the UE. In step 1204, the UE transmits an MBMS RB Setup Complete message corresponding to the received MBMS RB Setup message to the SRNC.

In step 1205, the UE receives MBMS data. In step 1206, if the UE detects that a user does not want to receive a corresponding MBMS service type any longer, the UE transmits an MBMS Service Deactivation message indicating expected suspension of MBMS data reception for the MBMS service type. In step 1207, the UE receives an MBMS RB Release message used in receiving MBMS data from the SRNC, and in step 1208, the UE transmits an MBMS RB Release Complete message to the SRNC as a response to the MBMS RB Release message after releasing MBMS RB used for reception of the MBMS data, thereby ending the procedure.

FIG. 13 is a flowchart illustrating a procedure for managing an MBMS context by an SGSN according to an embodiment of the present invention. Referring to FIG. 13, in step 1301, the SGSN is in a state where it stores a PDP list for MBMS services, a UE list of UEs receiving the MBMS services, for the MBMS services, and an RNC list of RNCs providing the MBMS services, for the MBMS services. In step 1302, the SGSN determines whether an Activate MBMS Context Request message is received from a particular UE. If an Activate MBMS Context Request message is received from a particular UE, the SGSN proceeds to step 1303. In step 1303, the SGSN determines whether an MBMS service type requested by the UE is being served in an RNC to which the UE belongs. Here, an RNC list for the respective MBMS services are used in a process of determining whether an MBMS service type requested by the UE is being served in an RNC to which the UE belongs. Though not illustrated in FIG. 13, it is also possible to determine whether the requested MBMS service type is being provided from the SRNC by directly transmitting an MBMS RAB Setup Request message for MBMS data transmission to the SRNC for the UE without determining whether the requested MBMS service type is being provided from the RNC to which the UE belongs.

If the MBMS service type requested by the UE is being provided from the RNC to which the UE belongs, the SGSN proceeds to step 1311. In step 1311, the SGSN transmits an MBMS RAB Setup Request message to an SRNC for the UE. In step 1312, the SGSN receives an MBMS RAB Setup Complete message from the SRNC, and then the SGSN determines whether information included in the MBMS RAB Setup Complete message received from the SRNC has the contents indicating that the SRNC directly serves the MBMS service type in step 1313. If the information has the contents indicating that the SRNC directly serves the MBMS service type, the SGSN proceeds to step 1331. In step 1331, the SGSN transmits MBMS data. In step 1332, the SGSN adds the RNC to an RNC list of RNCs providing the MBMS service, adds the UE to a UE list of UEs receiving the MBMS service, and then proceeds to step 1345.

However, if it is determined in step 1313 that the information does not have the contents indicating that the SRNC directly serves the MBMS service type, the SGSN proceeds to step 1380. In step 1380, the SGSN proceeds to step 1341 without adding the SRNC to an RNC list of each MBMS service. In step 1341, the SGSN determines whether there is an MBMS RAB Setup Request message for an MBMS Data Transmission Request message from another RNC. Here, "another RNC" refers to a CRNC. If there is an MBMS RAB Setup Request message for an MBMS Data Transmission Request message from another RNC, the SGSN proceeds to step 1342. In step 1342, the SGSN transmits an MBMS RAB Setup Complete message to the above-stated RNC, and then proceeds to step 1343. In step 1343, the SGSN transmits MBMS data to the above RNC. In step 1344, the SGSN adds the above RNC, i.e., a CRNC for the UE requesting the MBMS service, to an RNC list of RNCs providing the MBMS service, adds the UE to a UE list of UEs receiving the MBMS service, and then proceeds to step 1345.

In addition, if it determined in step 1341 that there is no MBMS RAB Setup Request message for an MBMS Data Transmission Request message from another RNC, the SGSN proceeds to step 1351. In step 1351, the SGSN adds the MBMS service ID to a UE list of each MBMS service type, i.e., an MM context of the UE, and then proceeds to step 1345. If it is determined that no MBMS Data Transmission Request message was received from another RNC, it indicates that the requested MBMS service type is already being served by the above RNC.

However, if it is determined in step 1303 that the MBMS service type requested by the UE is not being served in an RNC to which the UE belongs, the SGSN proceeds to step 1321. In step 1321, the SGSN transmits an MBMS Service Request message to an RNC (SRNC) to which the UE belongs. In step 1322, the SGSN receives an acknowledgement message, i.e., MBMS Service Response message, for the MBMS Service Request message from the RNC (SRNC). In step 1323, the SGSN determines whether the MBMS Service Response message for the MBMS Service Request message has the contents indicating that the RNC directly supports the corresponding MBMS service type. if the MBMS Service Response message does not have the contents indicating that the RNC supports the corresponding MBMS service type, the SGSN proceeds to step 1341. However, if it is determined that the MBMS Service Response message has the contents indicating that the RNC supports the corresponding MBMS service type, the SGSN proceeds to step 1351. In step 1351, the SGSN adds only a UE ID of the UE to a UE list of UEs receiving the MBMS service. When it is determined that an MBMS RAB Setup Request message for the same MBMS Data Transmission Request message as the MBMS data requested by the UE was not received, it means that the MBMS service type requested by the UE is already being served in a CRNC for the UE. Therefore, the SGSN is allowed to add only the MBMS service ID to an MM context of the UE, and is not required to update an RNC list of each MBMS service. If it is determined in step 1323 that the RNC directly supports the corresponding MBMS service type, the SGSN adds only a UE ID of the UE to a UE list of UEs receiving the MBMS service in step 1351, and awaits reception of an MBMS Deactivation Request message from the UE in step 1345.

In step 1345, the SGSN receives from the UE an MBMS Deactivation Request message for the MBMS service type being provided to the UE. In step 1346, the SGSN determines whether an MBMS RAB Release message for the MBMS service is received from an RNC, i.e., SRNC or CRNC for the UE. If the MBMS RAB Release message is received, the SGSN proceeds to step 1347. In step 1347, the SGSN deletes the UE and the RNC from the UE list of UEs receiving the corresponding MBMS service type and the RNC list of RNCs providing the corresponding MBMS service type, respectively, and then proceeds to step 1349. In step 1349, the SGSN transmits an MBMS RAB Release Complete message to the RNC, and then ends the procedure.

However, if it is determined in step 1346 that no MBMS RAB Release message for the MBMS service is received from the RNC, i.e., SRNC or CRNC for the UE, then the SGSN proceeds to step 1348. In step 1348, the SGSN deletes the UE from the UE list of UEs receiving the corresponding MBMS service type, and then ends the procedure. Deleting the UE from the UE list of UEs receiving the MBMS service means that the SGSN deletes the MBMS service ID from an MM context of the UE.

To summarize the MBMS context update procedure by the SGSN newly proposed in the invention in conjunction with FIG. 13, the SGSN manages an MBMS list of MBMS services being provided to each UE, and manages an RNC list of RNCs separately providing respective MBMS services, so that the MBMS service is provided much easier.

Next, an MBMS context management procedure by the RNC will be described with reference to FIGS. 14A, 14B, 15, and 16. In the MBMS context management procedure by the RNC, consideration is taken into a case where the MBMS service is provided on a PtP basis and a case where the MBMS service is provided in a PtM basis. Because the RNC can become either an SRNC or a CRNC according to circumstances, the RNC must have both the MBMS context management function of the SRNC and the MBMS context management function of the CRNC, described in conjunction with FIGs. 11 and 12. Describing again an MBMS context of an SRNC described in conjunction with Table 5, an SRNC adds an MBMS service ID to an MM context (UE position, UE state, and channel use situation of UE) of UEs managed by the SRNC. The MBMS service ID can become an MBMS service ID of an MBMS service being provided in an SRNC, and an MBMS service ID of an MBMS service being provided in a CRNC. In addition, describing again an MBMS context of a CRNC, a CRNC manages a list of UEs receiving the MBMS service, for the MBMS service being provided in the CRNC. That is, the RNC manages a list of MBMS services being provided to each UE in view of an SRNC, and manages a list of MBMS services being provided in each RNC in view of a CRNC.

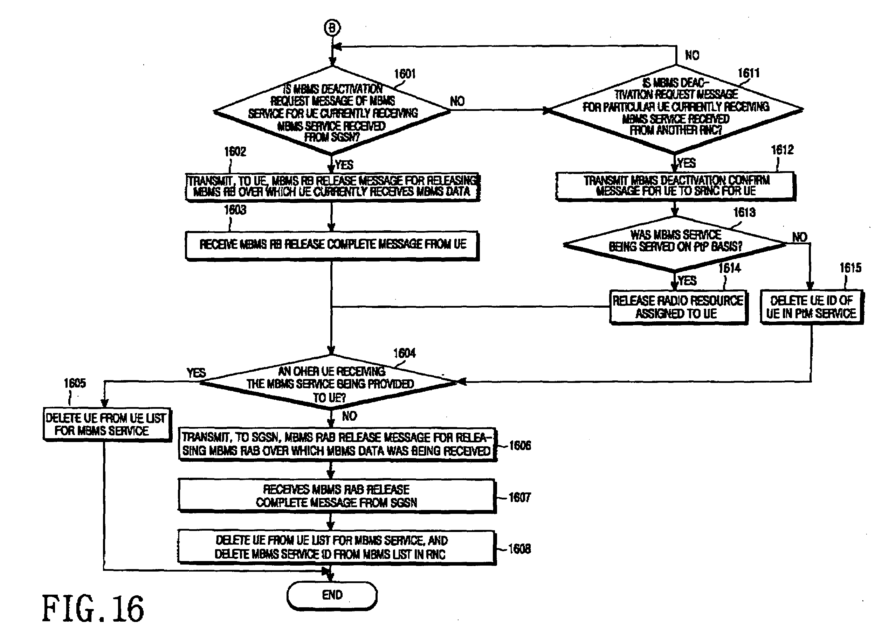

FIGS. 14A, 14B, 15, and 16 are flowcharts illustrating an MBMS context management procedure by an RNC according to an embodiment of the present invention. Referring to FIG. 14A, in step 1401, the RNC adds an MBMS service ID to a UE context of UEs receiving an MBMS service among the UEs in a UE context of UEs existing in the RNC, and manages a UE list of each MBMS service being served in the RNC. In 1402, the RNC determines whether an MBMS RAB Setup message for receiving MBMS data is received from the SGSN. If an MBMS RAB Setup message for receiving MBMS data is received from the SGSN, the RNC proceeds to step 1403. In step 1403, the RNC determines whether a UE scheduled to receive the MBMS data currently exists in a cell within the RNC. If a UE scheduled to receive the MBMS data does not currently exist in a cell within the RNC, the RNC proceeds to step 1411. In step 1411, the RNC transmits an MBMS Attach Request message for the UE to an RNC that manages a cell where the UE is currently located. The contents of the MBMS Attach Request message have been described in conjunction with FIGS. 11 and 12 so they will not be described again. In step 1412, the SRNC receives information on a channel for transmitting MBMS data to the UE, from an RNC managing a cell where the UE is located, through an MBMS Attach Response message, In step 1413, the SRNC transmits an MBMS RB Setup message to the UE using the received information. The SRNC receives an MBMS RB Setup Complete message from the UE in step 1414, and then deletes a UE ID of the UE from a UE list of each MBMS service, currently possessed by the SRNC, in step 1415. If the UE was not receiving the MBMS service being served in the RNC, the step 1415 can be omitted. The procedure following the step 1415 is connected to B of FIG. 16.

In step 1421, if a UE scheduled to receive the MBMS data exists in the RNC, i.e., if the UE is located in a cell controlled by the RNC, the RNC serves as an SRNC. The RNC transmits an MBMS RAB Setup Complete message to the SGSN in step 1421, and then receives MBMS data from the SGSN in step 1422. Upon receiving MBMS data from the SGSN in step 1422, the RNC determines in step 1423 whether it will transmit the MBMS data on a PtP basis. Whether the RNC serves the MBMS service on a PtP basis or on a PtM basis can be determined by the number of UEs expected to receive the MBMS service. That is, if the number of UEs scheduled to receive the MBMS data is smaller than a predetermined number, the RNC can select a method of transmitting MBMS data on a PtP basis, thereby reducing power consumption of a Node B. If the number of UEs scheduled to receive the MBMS data is larger than or equal to the predetermined number, the RNC can select a method of transmitting the MBMS data on a PtM basis, thereby to reducing power consumption of a Node B for the number of UEs. If the RNC determines to transmit the MBMS data to the UE on a PtP basis in step 1423, the RNC transmits an MBMS RB Setup message suitable for the PtP transmission to the UE in step 1424, and then transmits MBMS data after receiving an MBMS RB Setup Complete message from the UE in step 1425. In step 1428, the RNC creates a UE list for the MBMS service, and then adds the UE to the UE list for the MBMS service and adds an MBMS service ID of the MBMS service to a context of the UE. If the RNC determines to transmit the MBMS data on a PtM basis in step 1423, the RNC transmits channel information used for PtM transmission using an MBMS RB Setup message in step 1426, and then receives an MBMS RB Setup Complete message from the UE in step 1427. In step 1428, the RNC creates a UE list for the MBMS service, and then adds the UE to the UE list for the MBMS service and adds an MBMS service ID of the MBMS service to a context of the UE. The procedure following the step 1428 is connected to B of FIG. 16.

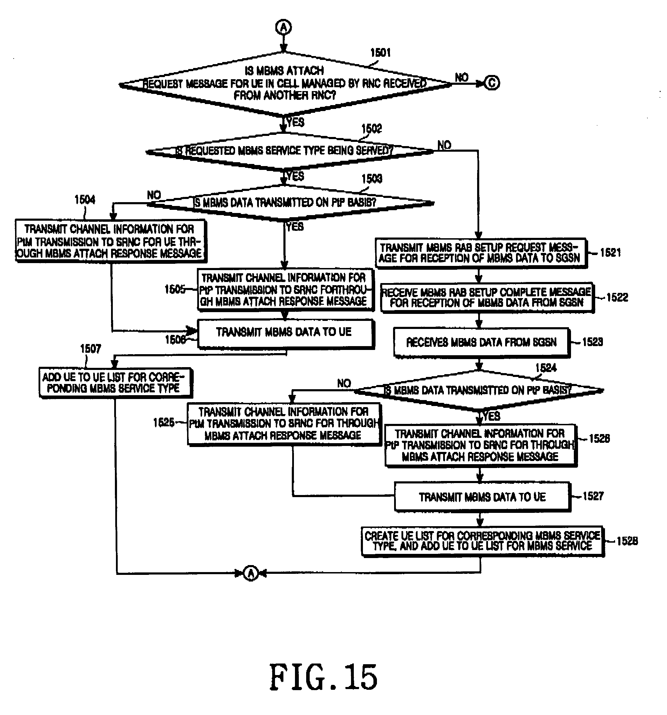

Upon failure to receive an MBMS RAB Setup Request message for receiving MBMS data from the SGSN in step 1402 of FIG. 14A, the RNC proceeds to step 1430 in FIG. 14B. If a request for providing a particular MBMS service to a particular UE is received from the SGSN in step 1430, the RNC performs a corresponding operation in step 1431, and if the request is not received from the SGSN, the RNC proceeds to A of FIG. 15. Upon receiving a request for providing a particular MBMS service to a particular UE from the SGSN in step 1430, the RNC determines in step 1431 whether a UE scheduled to receive the MBMS data is currently located in a cell within the RNC, and performs steps 1432 and 1441 according to the determination result. Even though the MBMS service is served in the RNC, if a UE scheduled to receive the MBMS service is not located in the RNC, i.e., if the UE is located in a cell controlled by a CRNC, step 1432 is a start point where the RNC serves as an SRNC. In step 1432, the RNC transmits an MBMS Attach Request message for the UE to an RNC managing a cell where the UE is located. As indicated above, the contents of the MBMS Attach Request message are illustrated in FIGs. 11 and 12. The SRNC receives information on a channel for transmitting MBMS data to the UE from an RNC managing a cell where the UE is located, through an MBMS Attach Response message, in step 1433, and transmits an MBMS RB Setup message to the UE using information detected from the MBMS Attach Response message, in step 1434. The SRNC receives an MBMS RB Setup Complete message from the UE in step 1435, and then deletes the UE ID from a UE list of each MBMS service type, currently possessed by the SRNC, in step 1436. If the UE is not receiving an MBMS service in the RNC, the step 1436 can be omitted. The procedure succeeding the step 1436 is connected to B of FIG. 16.

When the MBMS service is being served in the RNC and a UE scheduled to receive the MBMS service exists in the RNC, i.e., when the UE is located in a cell controlled by the RNC, the step 1441 is a start point where the RNC serves as a SRNC. In step 1441, the RNC determines whether the MBMS data is being transmitted on a PtP basis, If it is determined in step 1441 that the MBMS data is being transmitted on a PtP basis, the RNC transmits an MBMS RB Setup message suitable for the PtP transmission to the UE in step 1442, and then transmits MBMS data after receiving an MBMS RB Setup Complete message from the UE in step 1443. In step 1446, the RNC adds the UE to a UE list for the MBMS service, and adds the MBMS service ID to a context of the UE.

If it is determined in step 1441 that the MBMS data is being transmitted on a PtM basis, the RNC transmits channel information used for PtM transmission to the UE using an MBMS RB Setup message in step 1444, and then receives an MBMS RB Setup Complete message from the UE in step 1445. In step 1446, the RNC adds the UE to a UE list for the MBMS service, and adds the MBMS service ID to a context of the UE. The procedure following the step 1446 is connected to B of FIG. 16.

In step 1501 of FIG. 15, the RNC determines whether an MBMS Attach Request message for a UE in a cell managed by the RNC is received from another RNC. If the MBMS Attach Request message is not received, the procedure is connected to C of FIG. 14A. That is, an MM context of UEs and a UE list of each MBMS service, managed by the RNC, are not changed. If an MBMS Attach Request message for a UE in a cell managed by the RNC is currently received from another RNC in step 1501 of FIG. 15, the RNC determines in step 1502 whether the requested MBMS service type is currently being served. The RNC proceeds to step 1503 or step 1521 according to the determination results in step 1502. In step 1503, when an MBMS service requested by another RNC is currently being served in the RNC, the RNC determines whether the MBMS data is being transmitted on a PtP basis. If it is determined in step 1503 that the MBMS data is being transmitted on a PtP basis, the RNC transmits channel information suitable for the PtP transmission to an SRNC for the UE through an MBMS Attach Response message in step 1505, and transmits MBMS data to the UE in step 1506.

If it is determined in step 1503 that the MBMS data is being transmitted on a PtM basis, the RNC transmits channel information for the PtM transmission to an SRNC for the UE through an MBMS Attach Response message in step 1504, and transmits MBMS data to the UE in step. In the PtM transmission, the step 1506 indicates that the UE receives previously existing MBMS data, and does not indicate assignment of a new radio resource. In step 1507, the RNC adds the UE to a UE list for the corresponding MBMS service type. An operation of the RNC after the step 1507 is connected to B of FIG. 16.

If it is determined in step 1502 that the requested MBMS service is not currently being served, the RNC transmits an MBMS RAB Setup Request message for reception of the MBMS data to the SGSN in step 1521, receives an MBMS RAB Setup Complete message for reception of the MBMS data from the SGSN in step 1522, and then receives MBMS data from the SGSN in step 1523. The RNC determines in step 1524 whether it will transmit MBMS data requested by another RNC on a PtP basis or on a PtM basis. If it is determined in step 1524 that the MBMS data is to be transmitted on a PtP basis, the RNC transmits channel information for the PtP transmission to an SRNC for the UE through an MBMS Attach Response message in step 1526, and transmits MBMS data to the UE in step 1527.

If it is determined in step 1524 that the MBMS data is being transmitted on a PtM basis, the RNC transmits channel information for the PtM transmission to the SRNC for the UE through the MBMS Attach Response message in step 1525, and transmits MBMS data to the UE in step 1527. In the PtM transmission, the step 1527 does not indicate an assignment of a new radio resource because the MBMS data did not exist at a previous time. In step 1528, the RNC creates a UE list for the corresponding MBMS service type, and adds the UE to the UE list for the MBMS service. The procedure following the step 1528 is connected to B of FIG. 16.

FIG. 16 is a flowchart illustrating an operation of the RNC when the RNC has received, from an SGSN or another RNC, an MBMS Deactivation Request message for a UE having the RNC as an SRNC or a CRNC. In step 1601, the RNC determines whether an MBMS Deactivation Request message of an MBMS service for a UE currently receiving the MBMS service has been received from an SGSN, and then proceeds to step 1602 and 1611 according to the determination results. If it is determined in step 1601 that an MBMS Deactivation Request message for a UE currently receiving an MBMS service has been received from an SGSN, the RNC transmits to the UE an MBMS RB Release message for releasing MBMS RB over which the UE currently receives MBMS data, in step 1602, and then receives an MBMS RB Release Complete message from the UE in step 1603.

If it is determined in step 1601 that an MBMS Deactivation Request message for a UE currently receiving an MBMS service has not been received from an SGSN, the RNC determines in step 1611 whether an MBMS Deactivation Request message for a particular UE currently receiving an MBMS service has been received from another RNC. If it is determined in step 1611 that an MBMS Deactivation Request message for a particular UE currently receiving an MBMS service has not been received from another RNC, the RNC does not perform an operation of updating a UE list of each MBMS service and an MBMS service ID in an MM context of the UE, currently managed by the RNC. If it is determined that an MBMS Deactivation Request message for a particular UE currently receiving an MBMS service has been received from another RNC, the RNC transmits an MBMS Deactivation Confirm message for the UE to an SRNC for the UE in step 1612, determines in step 1613 whether the MBMS service which was being received by the UE was being served on a PtP basis, and then proceeds to step 1614 or 1615 according to the determination results. If it is determined in step 1613 that the UE was receiving an MBMS service corresponding to the MBMS Deactivation Request message on a PtP basis, a process of releasing a radio resource assigned to the UE is performed by the RNC in step 1614. However, if it is determined in step 1613 that the UE was receiving an MBMS service corresponding to the MBMS Deactivation Request message on a PtM basis, an operation of deleting a UE ID of the UE is performed by an SRNC in step 1615.

The RNC determines in step 1604 of FIG. 16 whether there is anther UE receiving the MBMS service that the UE was receiving, and then performs step 1605 and step 1606 according to the determination results. If there is another UE receiving the MBMS service that the UE was receiving, the RNC performs an operation of deleting the UE from a UE list for the MBMS service in step 1605. if there is no another UE receiving the MBMS service that the UE was receiving, the RNC transmits to the SGSN an MBMS RAB Release message for releasing MBMS RAB over which the MBMS data was being received, in step 1606, and then receives an MBMS RAB Release Complete message from the SGSN in step 1607. In step 1608, the RNC deletes the UE from a UE list for the MBMS service, and deletes the MBMS service ID from an MBMS list in the RNC.

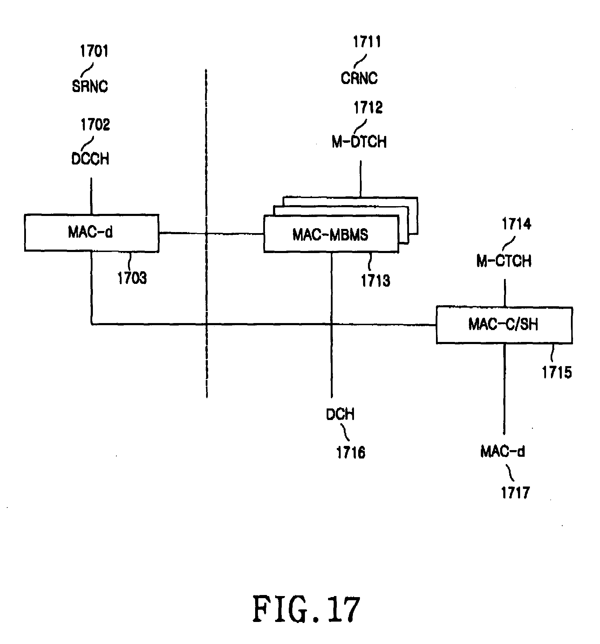

FIG. 17 schematically illustrates a structure of an L2/MAC layer for directly transmitting MBMS data from a CRNC to a UE according to an embodiment of the present invention. In FIG. 17, an SRNC 1701 is an SRNC for managing UEs desiring to receive the MBMS service, and assigns MAC-d 1703 for the UE. The MAC-d 1703 is a MAC entity for transmitting DCCH 1702 for the UE. The SRNC 1701 transmits an RRC signaling message transmitted from a control plane, using the DCCH 1702, which is a logical channel. The RRC signaling message, i.e., DCCH 1702, can be transmitted via MAC-MBMS 1713 or MAC-c/sh 1715 according to a CRNC's decision, as illustrated in FIG. 17. The CRNC 1711 can determine whether it will transmit MBMS data on a PtP basis or on a PtM basis, and in either case, an operation of the CRNC 1711 can be different. If the number of UEs expected to receive the MBMS service within the CRNC 1711 is larger than or equal to a predetermined number, the CRNC 1711 determines to transmit the MBMS data on a PtM basis, and if the number of the UEs is smaller than the predetermined number, the CRNC 1711 determines to transmit the MBMS data on a PtP basis. That is, the CRNC 1711 determines a data transmission method considering a current cell situation for efficiently utilization of radio resources. However, in this case, even though a cell situation in the CRNC is such that the MBMS data should be transmitted on a PtM basis, if a particular UE has moved while receiving the MBMS service along with a voice service, the CRNC assigns a dedicated channel to the particular UE on a PtP basis, and provides the MBMS service to the other UEs on a PtM basis. Therefore, in this case, for the same service, both the PtP method and the PtM method are available, and a detailed description thereof will be described below.

First, a method of transmitting MBMS data on a PtP basis by the CRNC will be described.

The CRNC 1711 sets up the MAC-MBMS 1713 according to corresponding UEs when it determined to transmit MBMS data on a PtP basis in a corresponding cell. The set MAC-MBMS 1713 is matched to the MAC-d 1703 on a one-to-one basis. That is, for one UE, the SRNC 1701 generates MAC-d 1703, and the CRNC 1711 generates MAC-MBMS 1713, and the generated MAC-d 1703 is matched to the generated MAC-MBMS 1713. Therefore, when the CRNC determines PtP transmission, the RRC signaling message, i.e., DCCH 1702, is delivered to corresponding MAC-MBMS 1713 via MAC-d 1703, and the MAC-MBMS 1713 combines corresponding DCCH with M-DTCH 1712 which is the MBMS data, and transmits the combined data to a corresponding UE using DPCH. When transmission paths are separately assigned to respective UEs or transport channels on an Iur interface between the MAC-d 1703 and the MAC-MBMS 1713, the MAC-MBMS 1713 is assigned a one-to-one transmission path to the MAD-d 1703. Therefore, the MAC-MBMS 1713 directly receives MBMS data transmitted from the MAD-d 1703 over the Iur interface. The MAC-MBMS 1713 has a function of connecting MBMS data (or M-DTCH 1712) for transmitting a signaling message of each UE received over the Iur interface according to UEs, to one entity so that a Node B can transmit the signaling message with one physical channel. The CRNC 1711 copies MBMS data received from an SGSN over an Iu interface according to respective MAC-MBMSs, and delivers the copied MBMS data to the MAC-MBMS 1713.

As a result, C-Plane for transmitting the signaling message (or DCCH 1702) can be separated from U-Plane for transmitting MBMS data (or M-DTCH 1712). That is, the C-Plane uses an existing path via an SRNC, and the U-Plane uses an Iu interface to the SGSN without passing through the SRNC, thereby directly using a path via the CRNC. The MAC-MBMS 1713 combines the DCCH 1702 of C-Plane with the M-DTCH 1712 of U-Plane, passing through different paths, and transmits the combined signal to a Node B so that it can be transmitted over DPCH. At this point, a transport format set of data passing through the DCCH 1702 and a transport format set of data passing through the M-DTCH 1712 can be independent of each other, and a transport format combination is generated by combining the transport format sets. As a result, transport format combination indication (TFCI) is determined, and a Node B can determine the TFCI.

Next, a method of transmitting MBMS data on a PtM basis by the CRNC will be described.

When the CRNC 1711 determines to transmit MBMS data on a PtM basis, the MAC-MBMS 1713 is not generated and DCCH information transmitted by the SRNC 1701 is delivered to the MAC-c/sh 1715 via the MAC-d 1703. In addition, the CRNC 1711 receives MBMS data from an SGSN, converts the received MBMS data into M-CTCH 1714, and transmits the MAC-CTCH 1714 via the MAC-c/sh 1715. Here, the DCCH 1701 and the M-CTCH 1714 for a particular UE can be transmitted using a transport channel and a physical channel, respectively, without being multiplexed in the MAC-c/sh 1715. Therefore, the UE separates FACH 1717 for transmitting the DCCH 1702 from and FACH 1717 for transmitting M-CTCH 1714, which is MBMS data. It is noted that even in this case, the DCCH 1702 is delivered to the UE via the SRNC 1701, and MBMS data is delivered from the SGSN to the UE via the CRNC 1711. That is, U-Plane and C-Plane are separated from each other. In a particular case, the CRNC 1711 determines to transmit MBMS data on a PtM basis. However, when the SRNC 1701 intends to transmit the DCCH 1702 to a corresponding UE on a PtP basis in order to transmit voice, the SRNC 1701 can transmit DCCH 1702 and voice data over DCH via MAC-MBMS 1713 using the MAC-d 1703 of FIG. 17 and transmit MBMS data (M-CTCH 1714) over FACH 1717 via the MAC-c/sh 1715. In this case, the MAC-MBMS 1713 has a function of simply delivering the data. Even in this case, the CRNC can directly deliver MBMS data to the UE without passing through the MAC-d 1703.

As the CRNC 1711 determines to transmit MBMS data received via the Iu interface on a PtP basis or on a PtM basis according to cells or Node Bs, the CRNC 1711 can transmit the MBMS data on a PtP basis by setting up the MAC-MBMS 1713, or directly transmit M-CTCH 1714 via the MAC-c/sh 1715. In this case, a layer for managing such a function can be additionally set up, and the set layer is a layer higher than a MAC layer. For this, an MBMS layer can be set up which exists over a radio link control (RLC) layer or a PDCP layer higher than the RLC layer. The MBMS layer copies data according to whether the data received via the Iu interface is determined to be transmitted on a PtP basis or on a PtM basis according to respective cells, and transmits the copied data to the RLC layer over the M-DTCH 1712 or the M-CTCH 1714 so that they are delivered to the MAC-MBMS 1713 and the MAC-c/sh 1715, respectively. Information exchange between the SRNC 1701 and the CRNC 1711, for generating DCH 1716 and FACH 1717, is the same as described in conjunction with FIGs. 8, 10, 11, 14A, 14B, 15, and 16. As described above, U-Plane and C-Plane for an MBMS service have several available combinations according to a UE state and an MBMS service type for the new MAC function of FIG. 17 proposed in the invention, and the available combinations are shown in Table 6. The "UE state" refers to CELL_FACH or CELL_DCH.

**Table 6**

| UE state | MBMS type | Combination |
|---|---|---|
| CELL_DCH | PtP | Iur interface between a MAC-MBMS and a MAD-d and an M-DTCH are used. |
| CELL_DCH | PtP | Iur interface between a MAC-MBMS and a MAC-d and an M-CTCH are used. |
| CELL_FACH | PtM | Iur interface between a MAC-MBMS and a MAC-c/sh and an M-CTCH are used. |
| CELL_FACH | PtP | Iur interface between a MAC-MBMS and a MAC-d and an M-DTCH are used. |

As described above, the present invention directly transmits MBMS data from a CRNC to a UE when the UE requesting an MBMS service is handed over from an SRNC to the CRNC in an MBMS mobile communication system. Thus, a separate Iur interface for transmitting MBMS data from the SRNC to the CRNC is not required. Therefore, the present invention advantageously maximizes efficiency of radio resources and improves system performance.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A method for providing a packet service data from a serving GPRS (General Packet Radio Service) support node (SGSN) to a user equipment (UE) when the UE moves to a second cell managed by a second radio network controller (RNC), the UE requesting permission to receive the packet service in a first cell managed by a first RNC, in a mobile communication system providing a packet service, the method comprising the steps of:
transmitting by the first RNC control information necessary for providing the packet service to the UE, to the second RNC;
receiving by the second RNC the control information and receiving the packet service data; and
transmitting by the second RNC the packet service data to the UE.

2. The method of claim 1, further comprising the step of transmitting by the second RNC the packet service data to the UE through a radio bearer (RB) after setting up the RB according to the received control information.

3. A method for providing a packet service to a user equipment (UE) when the UE moves to a second cell managed by a second radio network controller (RNC), the UE requesting permission to receive the packet service in a first cell managed by a first RNC, in a mobile communication system providing the packet service, the method comprising the steps of:
transmitting by the first RNC control information necessary for providing the packet service to the UE, to the second RNC;
analyzing by the second RNC the control information and notifying the first RNC that the second RNC is providing the packet service, when the second RNC can provide the packet service; and
transmitting by the second RNC packet service data to the UE.

4. The method of claim 3, further comprising the steps of:
sending by the second RNC a request for the packet service to a serving GPRS (General Packet Radio Service) support node (SGSN) when the second RNC cannot provide the packet service;
sending by the SGSN a request for radio resource assignment for providing the packet service, to the second RNC, in response to the packet service request of the second RNC;
assigning by the second RNC a radio resource for providing the packet service in response to the radio resource assignment request;
notifying, by the second RNC, the first RNC that the second RNC is providing the packet service, after assigning the radio resource.

5. The method of claim 4, further comprising the steps of:
transmitting by the second RNC the packet service data to the UE; and
transmitting by the second RNC the packet service data to the UE over a common channel if a number of UEs requesting the packet service in the second cell is larger than or equal to a predetermined number, and transmitting the packet service data over a dedicated channel if the number of UEs requesting the packet service in the second cell is smaller than the predetermined number.

6. The method of claim 4, further comprising the steps of:
sending by the UE a request for closing the packet service to the SGSN upon receiving a request for closing the packet service;
sending by the SGSN a request for closing the packet service by the UE to the first RNC in response to the packet service close request of the UE; and
sending by the first RNC a packet service close request of the UE to the second RNC in response to the packet service close request of the UE to suspend by the second RNC transmission of packet service data to the UE,

7. The method of claim 6, further comprising the steps of:
suspending by the second RNC transmission of the packet service data to the UE upon receiving the packet service close request of the UE from the first RNC; and
sending by the second RNC a request for closing the packet service to the SGSN when there is no other UE receiving the packet service in the second cell, after suspending transmission of the packet service data.

8. The method of claim 6, further comprising the step of updating by the second RNC a context of the packet service by including a UE identifier of the UE in the context of the packet service when the second RNC can provide the packet service.

9. The method of claim 8, further comprising the step of updating the context of the packet service by deleting the UE identifier from the context of the packet service, upon receiving the packet service close request of the UE from the first RNC.

10. An apparatus for providing a packet service to a user equipment (UE) when the UE moves to a second cell , the UE requesting permission to receive the packet service in a first cell, in a mobile communication system providing the packet service, the apparatus comprising:
a first RNC, which manages the first cell, for transmitting control information necessary for providing the packet service to the UE requesting the packet service; and
a second RNC, which manages the second cell, for receiving the control information from the first RNC, analyzing the control information, notifying the first RNC that the second RNC is providing the packet service when the second RNC can provide the packet service, and transmitting packet service data to the UE.

11. A method for providing a packet service to a user equipment (UE) when the UE moves to a second cell managed by a second radio network controller (RNC), the UE requesting permission to receive the packet service in a first cell managed by a first RNC, in a mobile communication system providing the packet service, the method comprising the steps of:
transmitting by the first RNC a UE identifier of the UE, a service identifier indicating the packet service, and information on a radio resource currently set up to the UE, to the second RNC;
receiving by the second RNC the UE identifier, the service identifier, and the radio resource information, and notifying the first RNC that the second RNC is providing the packet service when the second RNC can provide a packet service indicated by the packet service identifier; and
transmitting by the second RNC packet service data to the UE.

12. The method of claim 11, further comprising the steps of:
sending by the second RNC a request for the packet service to a serving GPRS (General Packet Radio Service) support node (SGSN) when the second RNC cannot provide the packet service;
sending by the SGSN a request for assigning a radio resource for providing the packet service to the second RNC along with a service identifier in response to the packet service request from the second RNC;
assigning by the second RNC the radio resource for providing the packet service in response to the radio resource assignment request;
notifying, by the second RNC, the first RNC that the second RNC is providing the packet service, after assigning the radio resource; and
transmitting by the second RNC the packet service data to the UE.

13. The method of claim 11, further comprising the steps of:
transmitting by the second RNC the packet service data to the UE; and
transmitting by the second RNC the packet service data to the UE over a common channel if a number of UEs requesting the packet service in the second cell is larger than or equal to a predetermined number, and transmitting the packet service data to the UE over a dedicated channel if the number of UEs requesting the packet service in the second cell is smaller than the predetermined number.

14. The method of claim 12, further comprising the steps of:
sending by the UE a request for closing the packet service to the SGSN upon receiving a packet service close request;
sending by the SGSN a request for closing the packet service by the UE to the first RNC in response to the packet service close request of the UE; and
sending by the first RNC a request for closing the packet service by the UE to the second RNC in response to the packet service close request of the UE to suspend by the second RNC transmission of packet service data to the UE.

15. The method of claim 14, further comprising the steps of:
suspending by the second RNC transmission of the packet service data to the UE upon receiving the packet service close request of the UE from the first RNC; and
sending by the second RNC a request for closing the packet service to the SGSN when there is no other UE receiving the packet service in the second cell, after suspending transmission of the packet service data.

16. , The method of claim 14, further comprising the step of updating a context of the packet service by including a UE identifier of the UE in the context of the packet service when the second RNC can provide the packet service.

17. The method of claim 16, further comprising the step of updating the context of the packet service by deleting the UE identifier from the context of the packet service upon receiving the packet service close request of the UE from the first RNC.

18. An apparatus for providing a packet service to a user equipment (UE) when the UE moves to a second cell, the UE requesting permission to receive the packet service in a first cell, in a mobile communication system providing the packet service, the apparatus comprising:
a first RNC, which manages the first cell, for transmitting a UE identifier of the UE, a service identifier indicating the requested packet service, and information on a radio resource currently set up by the UE; and
a second RNC for receiving the UE identifier, the service identifier and the radio resource information, notifying the first RNC that the second RNC is providing the packet service when the second RNC can provide the packet service, and transmitting packet service data to the UE.
